# EUROPÄISCHE PATENTSCHRIFT

(11) **EP 2 702 286 B1**
(45) Veröffentlichungstag und Bekanntmachung des Hinweises auf die Patenterteilung: **14.12.2016**
(21) Anmeldenummer: 12716005.9
(22) Anmeldetag: 20.04.2012
(51) Int. Cl.: F16C 33/38, F16C 33/40, F16C 29/06, F16C 33/41

(54) **WÄLZKÖRPERKÄFIG, WÄLZKÖRPERHALTERUNG UND WÄLZKÖRPERAUFNAHME**
ROLLING BEARING CAGE, ROLLING ELEMENT RETAINING BRACKET AND ROLLING ELEMENT HOLDING FIXTURE
CAGE DE CORPS DE ROULEMENT, CROCHET DE CORPS DE ROULEMENT ET ENREGISTREMENT DE CORPS DE ROULEMENT

(30) Priorität: 29.04.2011 DE 102011017751
(43) Veröffentlichungstag der Anmeldung: 05.03.2014
(73) Patentinhaber: Aktiebolaget SKF, 415 50 Göteborg (SE)
(72) Erfinder: EDELMANN, Ludwig, 97717 Sulzthal (DE); HOFMANN, Joachim, 97456 Dittelbrunn (DE); JESCHKA, Erwin, 97711 Maßbach (DE); KEMMER, Martin, 97440 Werneck (DE); VELDE, Henryk, 97440 Werneck (DE)
(74) Vertreter: Kuhstrebe, Jochen
(86) Internationale Anmeldenummer: PCT/EP2012/057314
(87) Internationale Veröffentlichungsnummer: WO 2012/146548

(56) Entgegenhaltungen:
- DE-B- 1 168 176
- DE-U- 1 890 032
- GB-A- 1 162 570
- JP-A- H05 126 149
- JP-U- H01 166 821
- US-A- 6 116 783

## Beschreibung

Ausführungsbeispiele der vorliegenden Erfindung betreffen einen Wälzkörperkäfig, einer Wälzkörperhalterung und eine Wälzkörperaufnahme, wie sie beispielsweise im Rahmen von Linearwälzlagern verwendet werden können.

Eine Linearführung ermöglicht eine im Wesentlichen reibungsfreie Translationsbewegung einer oder mehrerer beweglicher Baugruppen oder anderer Komponenten einer Maschine. Je nach Art des verwendeten Führungskonzepts werden hierbei Gleitführungen und Wälzführungen unterschieden. Wälzführungen beruhen auf dem Prinzip der Umwälzung von Wälzkörpern zwischen zwei sich relativ zueinander bewegenden Führungselementen. Als Wälzkörper dienen beispielsweise Kugeln, Zylinder, Nadeln, Tonnen und andere Wälzkörperformen.

Bei Linearwälzlagern ist - trotz des Namens - die Bewegung nicht auf ausschließlich lineare Bewegungen im mathematischen Sinne beschränkt. Sie ermöglichen vielmehr eine translatorische Bewegung im Vergleich zu Rotationsbewegungen, die durch entsprechende Rotationswälzlager geführt werden. Gerade im Bereich der Linearlager werden daher die Begriffe "linear" und "translatorisch" häufig synonym verwendet.

Mithilfe von Linearwälzlagern lassen sich präzise Translationsbewegungen in vielfältigen Anwendungssituationen realisieren. Zu den Linearwälzlagerführungen gehören unter anderem Profilschienenführungen. Sie weisen häufig einen Profilschienen- bzw. Führungswagen auf, der auf einer Profilschiene oder einer anderen Führungsschiene linear beweglich angeordnet ist. Der Führungswagen stützt sich hierbei, vermittelt durch eine Mehrzahl von Wälzkörpern, auf einer Profilschiene oder auch einer anderen Laufbahn ab. Während der Bewegung rollen so die Wälzkörper sowohl auf der Profilschiene als auch an einem entsprechenden Gegenbauteil des Führungswagens, dem sogenannten Lastbereich oder Lastkanal, ab.

Die Wälzkörper bewegen sich dabei im Allgemeinen mit der Hälfte der Geschwindigkeit des bewegten Führungselements, bei dem es sich - je nach Einsatzgebiet und der Frage, welche Komponente ortsfest ist - um den Führungswagen oder auch die Führungsschiene bzw. Profilschiene handeln kann. Die Wälzkörper bewegen sich hierbei jedoch bezüglich beider Komponenten mit dieser Geschwindigkeit.

Bei Anwendungen, in denen der Hub oder die Amplitude der Linearbewegung in die Größenordnung der Abmessung des Führungswagens gerät, ist es daher notwendig, Wälzkörper für die weitere Bewegung in den Lastkanal zurückzuführen. Dies wird durch einen Rücklaufkanal oder Rücklaufbereich erreicht, der im Allgemeinen parallel zu dem Lastkanal verläuft, in dem sich jedoch die Wälzkörper in die entgegengesetzte Richtung bewegen. Zwischen dem Rücklaufbereich und dem Lastbereich sind hierbei zwei Umlenkbereiche angeordnet, in denen die Wälzkörper auf einer gebogenen Bahn vom Lastbereich in den Rücklaufbereich und umgekehrt transportiert werden. Diese Führungen werden im Fall von Kugeln als Wälzkörper aufgrund ihres Umlaufs auch als Kugelumlaufführungen, im allgemeineren Fall als Wälzkörperumlaufführungen bezeichnet.

Eine Kugelumlaufführung zeichnet sich dadurch aus, dass der Führungswagen mittels Kugeln relativ zur Führungsschiene beweglich gelagert ist und dass die Kugeln auf einer in sich geschlossenen, also "unendlichen Bahn" umlaufen. Eine Kugelumlaufführung ermöglicht somit im Prinzip eine lineare Bewegung des Linearwagens, die nur durch die Abmessungen der Führungsschiene begrenzt wird.

Bei solchen Linearwälzlagern kann es aufgrund unterschiedlichster Beweggründe ratsam sein, die Wälzkörper in einem Käfig zu führen. Hierdurch können unter anderem die Montage und die Wartung der Linearführung vereinfacht werden oder aber auch unterschiedliche Betriebseigenschaften positiv beeinflusst werden.

Auch im Bereich von Linearwälzlagern mit einem begrenzten Hub oder einer begrenzten Amplitude, sogenannter "endlicher Linearlager", können Käfige sinnvoll sein, da diese gegebenenfalls ein Auseinanderrollen der Wälzkörper verhindern können.

Eine besondere Form der Linearwälzlagerführungen stellen die bereits oben genannten Profilschienenführungen dar. Bei diesen bewegt sich ein Profilschienenwagen relativ zu einer Profilschiene, wobei dieser im Allgemeinen nur durch die Länge der Profilschiene hinsichtlich seines Hubs bzw. seiner Amplitude begrenzt ist. Wälzlagerkäfige für Profilschienenführungen werden daher in der Mehrzahl der Anwendungen zurückgeführt. Diese Rückführungen können entweder durch Bohrungen in den häufig aus Stahl gefertigten Wagenkörpern der Profilschienenwagen oder auch als außen liegende Rückführungen, um den Stahlkörper des Profilschienenwagens herum realisiert werden. Entsprechende außen liegende Rückführungsbereiche werden häufig aus Kunststoff gebaut.

Im Fall der Variante mit Rücklaufbohrungen als Rücklaufkanal erfordert so jede Käfigreihe eine separate Bohrung, sodass in den Stahlkörper für jede einzelne Käfigreihe eine entsprechende Bohrung eingebracht werden muss. Im Falle Variante mit außen liegender Rückführung ist es notwendig, den Wagenkörper entsprechend schmaler auszuführen, was aufgrund des nun nicht mehr zur Verfügung stehenden Materials häufig mit einem Steifigkeitsverlust des Profilschienenwagens und damit zu einer geringeren Belastbarkeit desselben einhergeht.

Die DE 1 168 176 beziehen und die JP H01-166821 U sich auf einen Wälzkörperkäfig für Längsführungen mit winklig zueinander stehenden Wälzkörperlaufbähnen. Die DE1 890 032 U beschreibt einen Wälzkörperkäfig für prismatische Rollbahnen, die US 6,116,783 eine Kugelkette, die GB 1,162,570 einen Kugellagerkäfig insbesondere für Großtiefrillenkugellager und die JP H05-126149 A eine Kugelkette für eine Linearbewegungsführungsvorrichtung.

Ausgehend hiervon besteht daher ein Bedarf, einen Raumbedarf für die Rückführung der Wälzkörper bzw. der Wälzkörperkäfige zu reduzieren.

Dieser Bedarf wird durch eine Wälzkörperaufnahme gemäß Anspruch 1 oder einen Profilschienenwagen gemäß Anspruch 8 gelöst.

Ein Ausführungsbeispiel einer Wälzkörperhalterung für ein Linearwälzlager umfasst eine erste Wälzkörperaufnahme und eine zweite Wälzkörperaufnahme, wobei die erste Wälzkörperaufnahme einen ersten Abschnitt und einen zweiten Abschnitt aufweist, die ausgebildet sind, um zusammen einen Wälzkörper alleine aufzunehmen und drehbar zwischen dem ersten und dem zweiten Abschnitt zu halten. Der erste Abschnitt und der zweite Abschnitt der ersten Wälzkörperaufnahme sind entlang einer ersten Richtung angeordnet, wobei die erste und die zweite Wälzkörperaufnahme entlang einer von der ersten Richtung verschiedenen zweiten Richtung angeordnet sind. Die Wälzkörperhalterung ist ausgebildet, um einen Abstand der ersten Wälzkörperaufnahme zu der zweiten Wälzkörperaufnahme entlang der zweiten Richtung zwischen einem maximalen Abstandswert und einem minimalen Abstandswert veränderbar zu machen.

Ein Wälzkörperkäfig für ein Linearwälzlager gemäß einem Ausführungsbeispiel umfasst eine Vielzahl erster Wälzkörperaufnahmen, die entlang einer ersten Richtung angeordnet sind, um eine erste Reihe von ersten Wälzkörpern aufzunehmen, und eine Vielzahl zweiter Wälzkörperaufnahmen, die parallel zu der ersten Richtung angeordnet sind und entlang einer zweiten Richtung von der Vielzahl erster Wälzkörperaufnahmen beabstandet sind, wobei die zweite Richtung von einer ersten Wälzkörperaufnahme der Vielzahl erster Wälzkörperaufnahmen zu einer der ersten Wälzkörperaufnahme nächstgelegenen zweiten Wälzkörperaufnahme der Vielzahl zweiter Wälzkörperaufnahmen verläuft. Der Wälzkörperkäfig ist ausgebildet, einen Abstand der ersten Wälzkörperaufnahme zu der zweiten Wälzkörperaufnahme entlang der zweiten Richtung zwischen einem maximalen Abstandswert und einem minimalen Abstandswert veränderbar zu machen.

Eine Wälzkörperaufnahme für ein Linearwälzlager gemäß einem Ausführungsbeispiel umfasst einen ersten Abschnitt und einem zweiten Abschnitt, die ausgebildet sind, um zusammen einen Wälzkörper alleine aufzunehmen und drehbar zwischen dem ersten und dem zweiten Abschnitt zu halten, sowie einen Basisabschnitt, der den ersten Abschnitt und den zweiten Abschnitt mechanisch in einer ersten Richtung verbindet, wobei der Basisabschnitt an einer dem ersten und dem zweiten Abschnitt abgewandten Seite eine Basislänge aufweist. Die Wälzkörperaufnahme umfasst ferner einen Verbindungsabschnitt, der mit dem Basisabschnitt an der dem ersten und zweiten Abschnitt abgewandten Seite verbunden ist, wobei der Verbindungsabschnitt eine Länge aufweist, die der Hälfte der Basislänge entspricht, und wobei der Verbindungsabschnitt eine Bohrung entlang der ersten Richtung aufweist, um ein Kopplungselement aufnehmbar zu machen.

Ein Profilschienenwagen für ein Linearwälzlager gemäß einem Ausführungsbeispiel umfasst einen Wälzkörperkäfig oder eine Mehrzahl von Wälzkörperhalterungen, wie sie zuvor beschrieben wurden, eine Vielzahl von Wälzkörpern, die in den Wälzkörperaufnahmen des Wälzkörperkäfigs oder der Mehrzahl von Wälzkörperhalterungen aufgenommen sind, wobei die Wälzkörper in den ersten Wälzkörperaufnahmen eine erste Reihe von Wälzkörpern und die Wälzkörper in den zweiten Wälzkörperaufnahmen eine zweite Reihe von Wälzkörpern bilden, einen Lastbereich, einen Rücklaufbereich und einen Umlenkbereich, der zwischen dem Lastbereich und dem Rücklaufbereich angeordnet ist. Der Wälzkörperkäfig oder die Mehrzahl von Wälzkörperhalterungen sind in dem Rücklaufbereich in einem gemeinsamen Rücklaufkanal für die erste und die zweite Reihe von Wälzkörpern geführt, wobei der gemeinsame Rücklaufkanal eine Querschnittsform aufweist, sodass ein Eintreten der Wälzkörper der ersten Reihe und der zweiten Reihe einen Abstand der ersten und zweiten Wälzkörperaufnahmen erfordert, der kleiner als der maximale Abstandswert ist.

Ausführungsbeispielen liegt hierbei die Erkenntnis zugrunde, dass eine Reduzierung des Raumbedarfs für die Rückführung der Wälzkörper bzw. der Wälzkörperkäfige dadurch erzielt werden kann, indem eine Wälzkörperhalterung oder ein Wälzkörperkäfig derart ausgestaltet wird, dass ein Abstand entlang der zweiten Richtung, die von der Richtung zwischen den Wälzkörpern bzw. den beiden Abschnitten zur Aufnahme eines Wälzkörpers verschieden ist, zwischen einem maximalen Abstandswert und einem minimalen Abstandswert veränderbar ist. Hierdurch ist es beispielsweise möglich, bei einem Profilschienenwagen gemäß einem Ausführungsbeispiel den Rücklaufbereich als gemeinsamen Rücklaufkanal auszuführen, wobei der Rücklaufkanal eine Querschnittsform aufweist, sodass ein Eintreten der Wälzkörper einen Abstandswert erfordert, der kleiner ist als der maximale Abstandswert. Hierdurch ist es möglich, eine erste Laufbahn des Lastbereichs für die erste Reihe von Wälzkörpern, eine zweite Laufbahn für die Wälzkörper der zweiten Reihe und den gemeinsamen Rücklaufkanal in einem gemeinsamen, einstückig bzw. einteilig ausgeführten Bauteil des Profilschienenwagens auszuführen. Bei diesem kann es sich beispielsweise um einen Körper des Profilschienenwagens handeln.

Ausführungsbeispiele von Wälzkörperhalterungen aber auch von Wälzkörperkäfigen können hierbei derart ausgebildet sein, dass zwischen der ersten und der zweiten Wälzkörperaufnahme ein Scharnier angeordnet ist, durch welches die beiden Wälzkörperaufnahmen zueinander schwenkbar werden. Hierbei kann das Scharnier beispielsweise ausgebildet sein, um die beiden Wälzkörper um eine Achse schwenkbar zu machen, de im Wesentlichen parallel zu der ersten Richtung verläuft, in der die beiden Abschnitte der Wälzkörperaufnahmen bzw. die Vielzahl der Wälzkörperaufnahmen angeordnet sind. Die Verwendung eines Scharniers, um den Abstand zwischen der ersten und der zweiten Wälzkörperaufnahme veränderbar zu machen, stellt hierbei eine mechanisch einfach zu realisierende und daher häufig mechanisch besonders robuste und belastbare Variante dar. Alternativ oder ergänzend können auch die Wälzkörperaufnahmen zueinander hinsichtlich ihres Abstands verändert werden, indem diese durch eine entsprechende Ausbildung zueinander verschiebbar sind.

Ein Ausführungsbeispiel einer Wälzkörperhalterung kann ferner gegebenenfalls eine Kopplungseinrichtung bzw. Verbindungseinrichtung aufweisen, die ausgebildet ist, um eine Mehrzahl von Wälzkörperhalterungen miteinander verbindbar zu machen, um so einen Wälzkörperkäfig zu bilden. Die Kopplungseinrichtung kann beispielsweise eine Schnappverbindung, einen Haken, eine Öse oder eine Bohrung zum Koppeln mit einem Kopplungselement umfassen. Ausführungsbeispiele von Wälzkörperhalterungen können jedoch ebenso als einzelne Wälzkörperhalterungen zum Einsatz kommen.

Entsprechend kann beispielsweise bei einem Wälzkörperkäfig gemäß einem Ausführungsbeispiel das Scharnier, wie es zuvor beschrieben wurde, eine Bohrung in der ersten Wälzkörperaufnahme, eine Bohrung in der zweiten Wälzkörperaufnahme und ein Kopplungselement umfassen, bei dem es sich beispielsweise um einen Verbindungsdraht, ein Verbindungsband oder eine Verbindungsschnur handelt. Gerade eine solche Ausgestaltung bietet beispielsweise die Möglichkeit, unterschiedliche Materialien für die Wälzkörperaufnahmen und das Kopplungselement zu verwenden, um beispielsweise gezielt Materialeigenschaften eines ersten Materials für die Wälzkörperaufnahmen auszunutzen und Materialeigenschaften eines zweiten, von dem ersten Material verschiedenen Material für das Kopplungselement zu verwenden. Dies setzt natürlich voraus, dass die Wälzkörperhalterung, der Wälzkörperkäfig oder die Wälzkörperaufnahme das erste Material aufweist, während das Kopplungselement das zweite Material aufweist. Alternativ oder ergänzend kann auch ein Folienscharnier, also beispielsweise eine Verjüngung oder eine Ausdünnung des oder der Wälzkörperaufnahmen, als Scharnier verwendet werden.

Ein Ausführungsbeispiel einer Wälzkörperaufnahme, wie diese oben beschrieben wurde, kann hierbei eine besonders effiziente Methode darstellen, eine Wälzkörperhalterung bzw. einen Wälzkörperkäfig zu implementieren.

Bei einer solchen Wälzkörperaufnahme gemäß einem Ausführungsbeispiel können der erste und der zweite Abschnitt im Falle eines kugelförmigen Wälzkörpers beispielsweise kreisringförmig ausgebildet sein und einen Abstand voneinander aufweisen, der geringer als ein Durchmesser des kugelförmigen Wälzkörpers ist. Im Falle eines zylinderförmigen, eines nadelförmigen oder eines tonnenförmigen Wälzkörpers können der erste und der zweite Abschnitt einer Wälzkörperaufnahme eine zentrale, rechteckige Ausnehmung aufweisen, wobei ein Abstand der beiden Aufnahmen wiederum geringer als ein Durchmesser des Wälzkörpers ist.

Nachfolgend werden unter Bezugnahme auf die beigefügten Figuren Ausführungsbeispiele näher erläutert und beschrieben.
Fig. 1 zeigt eine perspektivische Darstellung eines Wälzkörperkäfigs gemäß einem Ausführungsbeispiel mit einer Vielzahl von Wälzkörperhalterungen bzw. Wälzkörperaufnahmen gemäß Ausführungsbeispielen;
Fig.2 zeigt eine Querschnittsdarstellung des in Fig.1 gezeigten Ausführungsbeispiels;
Fig.3 zeigt eine Seitenansicht des in Fig.1 gezeigten Ausführungsbeispiels;
Fig.4 zeigt eine perspektivische Darstellung eines Wälzkörperkäfigs gemäß einem weiteren Ausführungsbeispiel mit einer Vielzahl von Wälzkörperhalterungen bzw. Wälzkörperaufnahmen;
Fig.5 zeigt eine Querschnittsdarstellung des in Fig. 4 gezeigten Ausführungsbeispiels;
Fig.6 zeigt eine Seitendarstellung des in Fig.4 gezeigten Ausführungsbeispiels;
Fig.7 zeigt eine weitere Seitendarstellung des in Fig.4 gezeigten Ausführungsbeispiels;
Fig. 8a zeigt eine Wälzkörperaufnahme gemäß einem Ausführungsbeispiel, wie sie beispielsweise bei dem in Fig.1 gezeigten Ausführungsbeispiel zum Einsatz kommt;
Fig. 8b zeigt eine Querschnittsdarstellung eines Ausführungsbeispiels einer Wälzkörperaufnahme, wie sie beispielsweise bei dem in Fig.4 gezeigten Ausführungsbeispiel zum Einsatz kommt; und
Fig.9 zeigt eine Querschnittsdarstellung durch einen Profilschienenwagen für ein Linearwälzlager gemäß einem Ausführungsbeispiel mit einem Wälzkörperkäfig, wie er in Fig. 1 gezeigt ist.

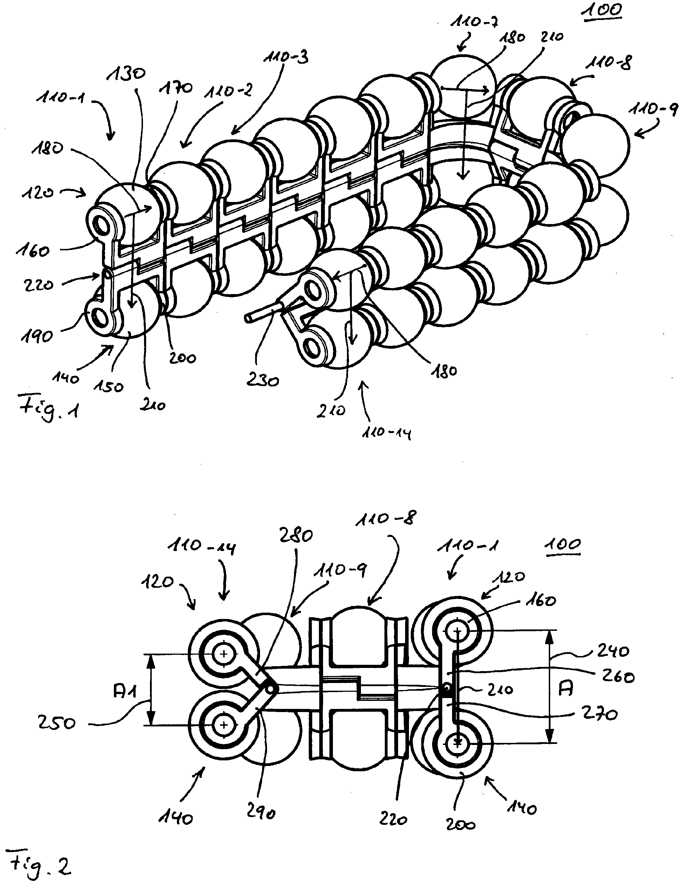

Bevor im Zusammenhang mit den Figuren 1 bis 9 Ausführungsbeispiele näher beschrieben und erläutert werden, bietet es sich an, an dieser Stelle darauf hinzuweisen, dass im Rahmen der vorliegenden Beschreibung für Bauteile, Maschinenteile, Objekte und andere Entitäten zusammenfassenden Bezugszeichen verwendet werden, wenn Eigenschaften oder Merkmale der betreffenden Entität eines oder mehrerer Ausführungsbeispiele beschrieben werden. Im Unterschied hierzu werden individuelle Bezugszeichen verwendet, die auf den zusammenfassenden Bezugszeichen basieren, wenn einzelne Entitäten näher beschrieben oder bezeichnet werden. Hierdurch ist es möglich, die Beschreibung knapp und straff zu halten und unnötige Wiederholungen zu vermeiden, da Passagen der Beschreibung, die sich auf eine Entität, eine Gattung von Entitäten, ein Ausführungsbeispiel oder eine Figur beziehen, ebenso auf eine entsprechende Entität, eine Gattung von Entitäten, ein anderes Ausführungsbeispiel oder eine andere Figur übertragbar sind, sofern nicht explizit etwas anderes angegeben ist oder sich aus dem Zusammenhang etwas anderes ergibt. Ebenso können Entitäten und Gattungen von Entitäten bei Ausführungsbeispielen vollständig oder teilweise identisch oder unterschiedlich ausgeführt sein.

Im Folgenden werden zunächst Wälzkörperkäfige gemäß Ausführungsbeispielen erläutert, die eine oder mehrere Wälzkörperhalterungen gemäß Ausführungsbeispielen umfassen. Diese Wälzkörperhalterungen sind durch eine Kopplungseinrichtung bzw. ein Kopplungselement zu dem entsprechenden Wälzkörperkäfig gekoppelt bzw. miteinander verbunden. Allerdings können Wälzkörperhalterungen gemäß Ausführungsbeispielen auch ohne eine entsprechende Kopplungseinrichtung bzw. ohne ein entsprechendes Kopplungselement implementiert werden, wenn sie beispielsweise als einzelne Wälzkörperhalterungen eingesetzt werden, ohne einen zusammenhängenden Wälzkörperkäfig zu bilden.

Darüber hinaus bietet es sich an, an dieser Stelle darauf hinzuweisen, dass Wälzkörperhalterungen und Wälzkörperkäfig gemäß Ausführungsbeispielen der vorliegenden Erfindung Wälzkörperaufnahmen aufweisen, die gemäß einem Ausführungsbeispiel einer Wälzkörperaufnahme implementiert sein können. Allerdings stellt die Verwendung einer Wälzkörperaufnahme gemäß einem Ausführungsbeispiel lediglich eine Implementierungsmöglichkeit für Ausführungsbeispiele einer Wälzkörperhalterung bzw. eines Wälzkörperkäfigs dar, wie dies die nachfolgende Beschreibung auch zeigen wird.

Fig. 1 zeigt ein erstes Ausführungsbeispiel eines Wälzkörperkäfigs 100, der eine Mehrzahl von Wälzkörperhalterungen 110-1, 110-2, ..., 110-14 aufweist. Lediglich der Vollständigkeit halber soll bereits an dieser Stelle erwähnt werden, dass die in Fig. 1 gezeigte Anzahl von Wälzkörperhalterungen 110 lediglich beispielhaft und nicht einschränkend ist. So können Wälzkörperkäfige 100 gemäß Ausführungsbeispielen auch eine größere oder eine geringere Anzahl von Wälzkörperhalterungen 110 aufweisen.

Die Wälzkörperhalterungen 110 weisen jeweils eine erste Wälzkörperaufnahme 120 für einen ersten Wälzkörper 130 und eine zweite Wälzkörperaufnahme 140 für einen zweiten Wälzkörper 150 auf Bei dem in Fig.1 gezeigten Ausführungsbeispiel handelt es sich bei den beiden Wälzkörpern 130, 150 um kugelförmige Wälzkörper bzw. Kugeln.

Die erste Wälzkörperaufnahme 120 weist hierbei einen ersten Abschnitt 160 und einen zweiten Abschnitt 170 auf, die ausgebildet sind, um zusammen den ersten Wälzkörper 130 alleine aufzunehmen und drehbar zwischen ihnen zu halten. Der erste und der zweite Abschnitt 160, 170 sind hierbei entlang einer ersten Richtung 180 angeordnet.

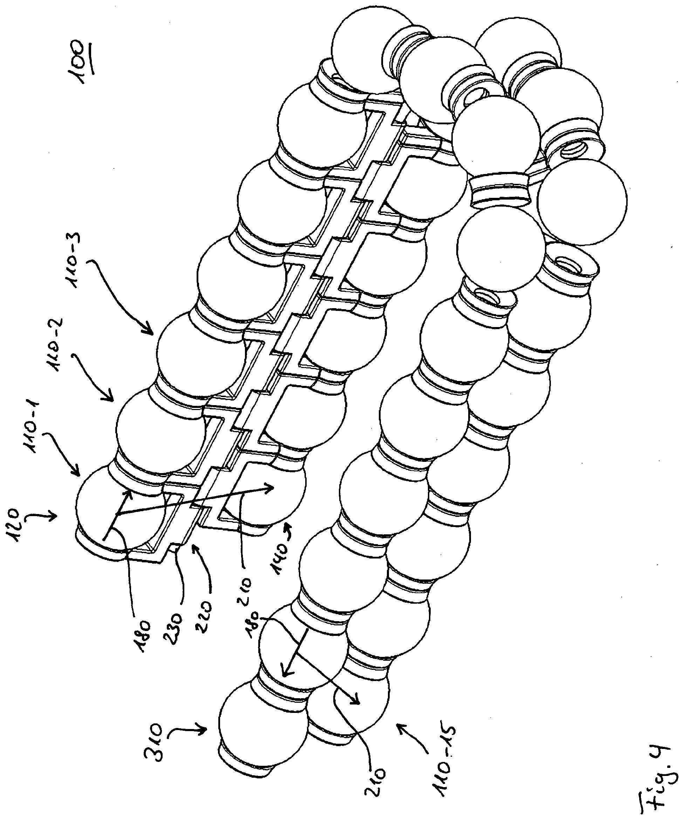

Entsprechend weist die Wälzkörperhalterung 110 ebenfalls einen dritten Abschnitt 190 und einen vierten Abschnitt 200 auf, die ausgebildet sind, um zusammen den zweiten Wälzkörper 150 alleine aufzunehmen und ebenfalls drehbar zwischen ihnen zu halten. Auch der dritte und vierte Abschnitt 190, 200 sind entlang der ersten Richtung 180 angeordnet. Entlang einer zweiten Richtung 210, die von der ersten Richtung 180 verschieden ist, sind diese beiden Abschnitte von dem ersten und dem zweiten Abschnitt 160, 170 beabstandet. Der dritte und vierte Abschnitt 190, 200 sind somit Teil der zweiten Wälzkörperaufnahme 140. Entsprechend sind auch die erste Wälzkörperaufnahme 120 und die zweite Wälzkörperaufnahme 140 entlang der zweiten Richtung 210 angeordnet, wobei die zweite Richtung 210 von der ersten Richtung 180 verschieden ist. Bei manchen Ausführungsbeispielen stehen so die beiden Richtungen 180, 210 im Wesentlichen senkrecht aufeinander, wobei jedoch bei anderen Ausführungsbeispielen, wie dies beispielsweise auch im Zusammenhang mit den Figuren 4 bis 7 noch näher gezeigt wird, ein Winkel zwischen diesen beiden Richtungen eingeschlossen wird, der sich je nach Betriebsbedingung ebenfalls verändern kann.

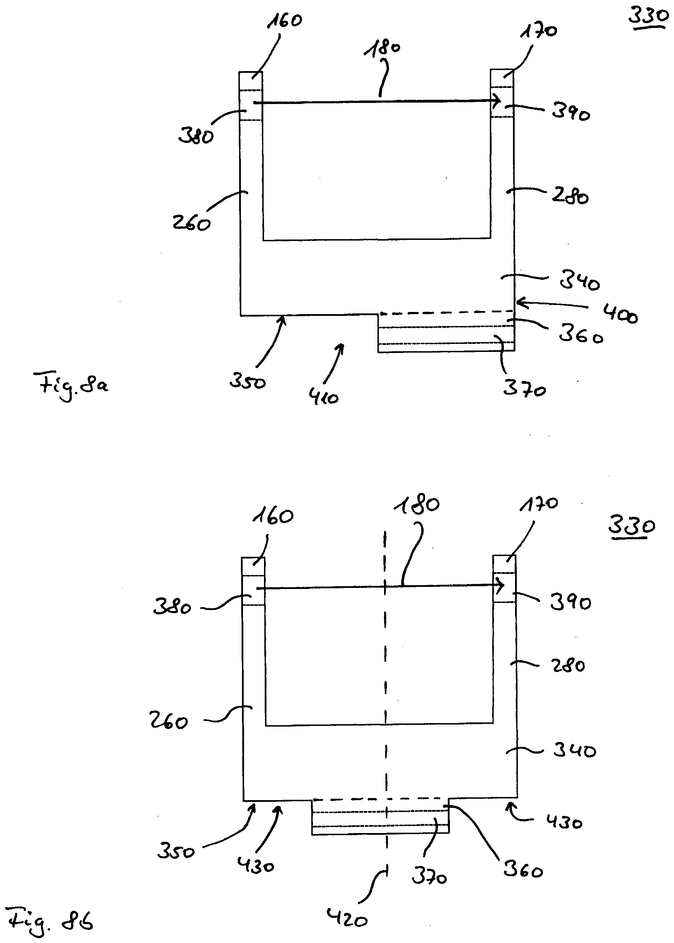

Die Wälzkörperhalterung 110 ist hierbei ausgebildet, um einen Abstand der ersten Wälzkörperaufnahme 120 zu der zweiten Wälzkörperaufnahme 140 entlang der zweiten Richtung zwischen einem maximalen Abstandswert und einem minimalen Abstandswert veränderbar zu machen. Bei dem in Fig. 1 gezeigten Ausführungsbeispiel weisen die Wälzkörperhalterungen 110 zu diesem Zweck ein Scharnier 220 auf, welches die beiden Wälzkörperaufnahmen 120, 140 zueinander schwenkbar macht, wobei die Achse des Scharniers 220 mit der ersten Richtung 180 im Wesentlichen übereinstimmt bzw. zu dieser im Wesentlichen parallel verläuft. Wie noch näher im Zusammenhang mit den Figuren 8a und 8b erläutert wird, weist das Scharnier 220 bei dem in Fig.1 gezeigten Ausführungsbeispiel jeweils eine Bohrung in der ersten Wälzkörperaufnahme 120 und der zweiten Wälzkörperaufnahme 140 auf, durch die ein gemeinsames Kopplungselement 230 geführt ist, welches nicht nur als Achse für das Scharnier 220 dient, sondern ebenfalls die Wälzkörperhalterungen 110 miteinander mechanisch zu dem Wälzkörperkäfig 100 verbindet. Anders ausgedrückt stellen das Kopplungselement 230 sowie die beiden Bohrungen in den Wälzkörperaufnahmen 120, 140 eine mögliche Implementierung einer Kopplungseinrichtung der Wälzkörperhalterung 110 dar. Bei anderen Ausführungsbeispielen kann die Kopplungseinrichtung bzw. Verbindungseinrichtung auch einen Haken, eine Öse oder eine Schnappverbindung umfassen, die ausgebildet ist, um eine Wälzkörperhalterung 110 mit einer anderen Wälzkörperhalterung 110 mechanisch zu koppeln bzw. mit dieser zu verbinden. Ebenso kann bei Ausführungsbeispielen das Scharnier 220 durch ein Folienscharnier, also eine Verjüngung oder einen ausgedünnten Bereich des oder der Wälzkörperaufnahmen gebildet sein.

Das Kopplungselement 230, wie es in Fig. 1 gezeigt ist, ist ein Verbindungsdraht, welcher durch die Bohrungen der Wälzkörperaufnahmen 120, 140 geführt ist. Der Verbindungsdraht kann hierbei beispielsweise aus einem hoch belastbaren Material, einem Metall, einer Metalllegierung, Stahl, einem hoch belastbaren Kunststoff oder Polyamid (PA) gefertigt sein bzw. dieses Material als zweites Material umfassen. Im Unterschied hierzu können bei Ausführungsbeispielen die erste und zweite Wälzkörperaufnahme 120, 140 oder auch die Wälzkörperhalterungen 110 ein erstes Material umfassen, welches gut spritzbar ist oder andere vorteilhafte Materialeigenschaften aufweist. Als erstes Material, aus dem die betreffenden Entitäten bestehen können oder diese zumindest teilweise aufweisen, kommen so beispielsweise Polyoxymethylen (POM) infrage.

Bevor im Zusammenhang mit Fig. 2 die Möglichkeit des veränderbaren Abstandswerts der beiden Wälzkörperaufnahmen 120, 140 erläutert wird, bietet es sich an, an dieser Stelle ebenfalls darauf hinzuweisen, dass Fig. 1 ebenfalls ein Ausführungsbeispiel eines Wälzkörperkäfigs zeigt, bei dem eine Vielzahl erster Wälzkörperaufnahmen 130 entlang der ersten Richtung 180 angeordnet sind. Bei diesen handelt es sich beispielsweise um die ersten Wälzkörperaufnahmen 120 der Wälzkörperhalterungen 110-1, 110-2 und 110-3. Entsprechend weist der Wälzkörperkäfig 100 ebenfalls eine Vielzahl zweiter Wälzkörperaufnahmen 140 auf, die ebenfalls durch die zuvor bezeichneten Wälzkörperhalterungen 110 gebildet werden, die ebenfalls entlang der ersten Richtung 180 angeordnet sind.

Fig. 1 zeigt weiter, dass die erste Richtung 180 sich entlang des Wälzkörperkäfigs 100 verändert. So zeigt beispielsweise die Wälzkörperhalterung 110-7, dass zumindest zum Teil die erste Richtung 180 einem Biegeradius des Wälzkörperkäfigs 100 folgt, wenn dieser in einem Umlenkbereich geführt wird. Darüber hinaus zeigt Fig. 1 anhand der Wälzkörperhalterung 110-14, dass die erste Richtung 180 sich auch entlang des Wälzkörperkäfigs 100 hinsichtlich ihrer Richtung verändern kann. So weist die erste Richtung 180 im Falle der Wälzkörperhalterung 110-14 der Wälzkörperhalterung 110-1 beispielsweise entgegen.

Unabhängig hiervon bleibt jedoch bei dem in Fig. 1 gezeigten Ausführungsbeispiel die zweite Richtung 210 stets in die gleiche Richtung gerichtet. Somit bleibt zumindest bei dem in Fig. 1 gezeigten Ausführungsbeispiel ein Winkel, der zwischen der ersten Richtung 180 und der zweiten Richtung 210 eingeschlossen ist, im Wesentlichen identisch bei etwa 90°.

Fig. 1 illustriert darüber hinaus, welchen mechanischen Belastungen die einzelnen Wälzkörperaufnahmen 120, 140 bzw. die Wälzkörperhalterungen 110 während des Betriebs, insbesondere im Umlenkbereich unterworfen sein können. So zeigt beispielsweise die Wälzkörperhalterung 110-7 eine deutliche Formänderung, wenn dieser dem bereits zuvor genannten Krümmungsradius im Umlenkbereich folgt. Hierbei kann zumindest kurzzeitig sogar die Halterungsfunktion der Wälzkörperaufnahmen 120, 140 beeinträchtigt sein.

Wie bereits zuvor angesprochen wurde, beruht die Idee von Ausführungsbeispielen darauf, den Wälzkörperkäfig 100, also beispielsweise den Kugelkäfig aus Fig. 1, derart auszugestalten, dass ein Wälzkörperabstand bzw. ein Kugelabstand in der Lastzone zwar durch die Laufbahnabstände von Schiene und Wagen zueinander definiert ist, im Rücklauf-Querschnitt jedoch möglichst verkleinert wird, um mehr Freiraum für z. B. Befestigungsbohrungen oder andere Komponenten zu gewinnen, oder auch andere vorteilhafte Aspekte zu realisieren. So kann gegebenenfalls die Stabilität des Profilschienenwagens aufgrund der Möglichkeit einer Implementierung eines gemeinsamen Rücklaufkanals verbessert werden.

Fig. 2 zeigt eine Querschnittsdarstellung durch den Wälzkörperkäfig 100 aus Fig. 1. Hierbei sind insbesondere die Wälzkörperhalterungen 110-1, 110-8, 110-9 und 110-14 dargestellt. Das Scharnier 220 ermöglicht es nun, dass ein Abstand zwischen der ersten Wälzkörperaufnahme 120 und der zweiten Wälzkörperaufnahme 140 dadurch veränderbar ist, dass die beiden Aufnahmen 120, 140 zueinander schwenkbar sind. Hierdurch ist es möglich, Abstandswerte der beiden Wälzkörperaufnahmen 120, 140 zwischen einem maximalen Abstandswert 240 (Abstandswert A), der bei der Wälzkörperhalterung 110-1 vorliegt, und einem minimalen Abstandswert 250 (Abstandswert A1), der bei der Wälzkörperhalterung 110-14 vorliegt, zu verändern. Die beiden zwischen den Wälzkörperhalterungen 110-1 und 110-14 gelegenen Wälzkörperhalterungen 110-8 und 110-9 weisen hierbei Abstandswerte auf, die zwischen dem maximalen Abstandswert und den minimalen Abstandswert liegen.

So befindet sich die Wälzkörperhalterung 110-1 in einem gestreckten Zustand, bei dem ein erster Schenkel 260 der ersten Wälzkörperaufnahme 120 und ein dritter Schenkel 270 der zweiten Wälzkörperaufnahme 140 im Wesentlichen fluchten, also einen Winkel von im Wesentlichen 180° miteinander einschließen. Ein zweiter Schenkel und ein vierter Schenkel der Wälzkörperhalterung 110-1 sind in Fig. 2 nicht zu sehen.

Im Unterschied hierzu schließen ein zweiter Schenkel 280 der ersten Wälzkörperaufnahme 120 und ein vierter Schenkel 290 der zweiten Wälzkörperaufnahme 140 der Wälzkörperhalterung 110-14 einen deutlich kleineren Winkel ein, da die erste und zweite Wälzkörperaufnahme 120, 140 dieser Wälzkörperhalterung aufeinander zu geschwenkt sind. Bei dieser Wälzkörperhalterung 110-14 sind entsprechend der erste Schenkel und der dritte Schenkel aufgrund der gewählten Darstellung nicht zu sehen.

Das Schwenken der beiden Wälzkörperaufnahmen 120, 140 zueinander kann beispielsweise in beiden Richtungen jeweils durch ein Einwirken einer entlang der zweiten Richtung 210 wirkenden Kraft durch entsprechende Laufbahnen eines Profilschienenwagens beispielsweise im Umlenkbereich hervorgerufen werden. Zu diesem Zweck kann es beispielsweise ratsam sein, die Schenkel 260, 270, 280, 290 exzentrisch zu Mittelpunkten der entsprechenden Wälzkörperaufnahmen 120, 140 vorzusehen, wie dies in Fig. 2 auch illustriert ist. So sind beispielsweise der erste und der dritte Schenkel 260, 270 der Wälzkörperhalterung 110-1 seitlich zu einer direkten Verbindung der Mittelpunkte der ersten Wälzkörperaufnahme 120 und der zweiten Wälzkörperaufnahme 140 versetzt. Um dies näher zu illustrieren, ist in Fig. 2 die zweite Richtung 210 bei der Wälzkörperhalterung 110-1 jeweils zwischen den betreffenden Mittelpunkten der beiden Wälzkörperaufnahmen 120, 140 eingezeichnet. Die dort eingezeichnete zweite Richtung 210 verläuft so außerhalb des ersten und dritten Schenkels 260, 270, also seitlich versetzt bzw. exzentrisch.

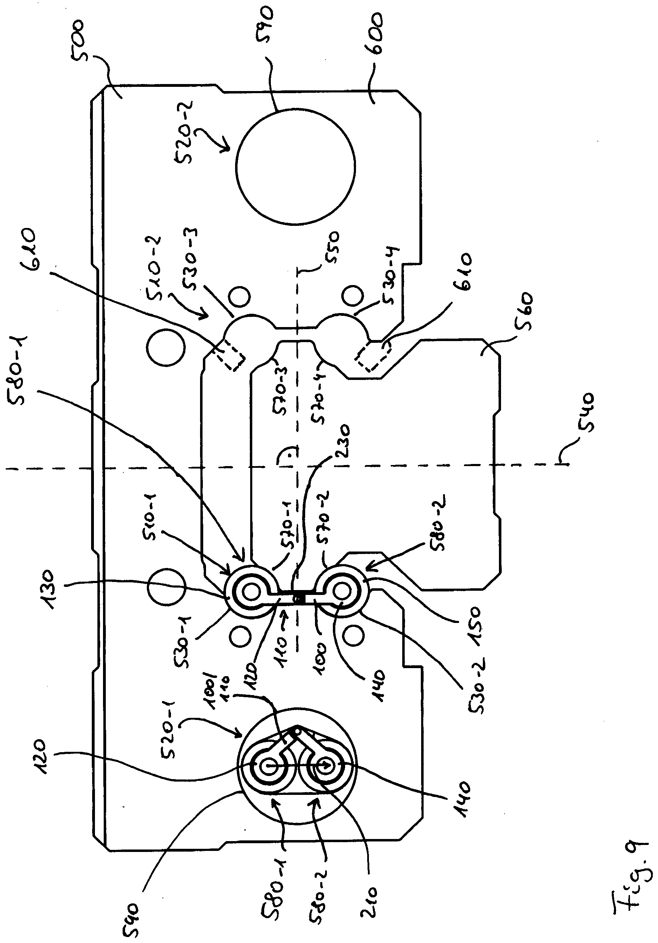

Der Wälzkörperkäfig 100 gemäß einem Ausführungsbeispiel weist so einzelne Glieder bzw. Wälzkörperhalterungen 110 auf, die wie bei einem Scharnier hinsichtlich ihres Abstandswertes veränderbar sind. Dadurch ist es möglich, die Querschnittsfläche entlang der zweiten Richtung 210, die häufig auch als Z-Richtung bezeichnet wird, zu beeinflussen. Dadurch ist es möglich, wie im Zusammenhang mit Fig. 9 noch näher gezeigt wird, durch den im Querschnitt veränderbaren "Scharnierkäfig" mit nur einer einzigen Bohrung als gemeinsamen Rücklaufkanal anstelle zweier Rücklaufkanäle einen entsprechenden Rücklaufbereich zu realisieren. Durch das in den Figuren 1 und 2 gezeigte Ausführungsbeispiel ist es so möglich, einen Bohrungsdurchmesser zu verwenden, der kleiner als der Wälzkörperkäfig im Laufbahnbereich ist.

Im Falle von Ausführungsbeispielen, bei denen eine Veränderung des Abstands der ersten und der zweiten Wälzkörperaufnahme 120, 140 nicht auf Basis eines Verschwenkens der Wälzkörperaufnahmen, sondern durch eine Verschiebung derselben erfolgt, kann es ratsam sein, die Wälzkörperaufnahmen 120, 140 ohne eine entsprechende exzentrische bzw. versetzte Führung der Schenkel 260, 270, 280, 290 zu implementieren. Eine solche Versetzung erzeugt häufig im Falle einer entsprechend eingeleiteten Kraft, also beispielsweise entlang der zweiten Richtung 210, ein Drehmoment, das letztendlich zu dem Verschwenken der beiden Wälzkörperaufnahmen 120, 140 führt.

Im Falle eines Ausführungsbeispiels, bei dem die Veränderung des Abstands der beiden Wälzkörperaufnahmen an 120, 140 nun nicht durch ein Verschwenken, sondern beispielsweise durch ein Verschieben der beiden Wälzkörperaufnahmen zueinander realisiert wird, kann es daher ratsam sein, die entsprechenden Schenkel 260, 270, 280, 290 zentrisch, also entlang der zweiten Richtung 210 zu führen, um gerade eine Ausbildung eines entsprechenden Drehmoments zu unterbinden, da gegebenenfalls ein solches ein Verhaken des entsprechenden Mechanismus begünstigen könnte.

Ein entsprechender Mechanismus kann beispielsweise auf Basis kammförmig ineinandergreifender Strukturen realisiert werden, die optional mit Anschlägen zur Begrenzung des Abstands hinsichtlich des maximalen und/oder des minimalen Abstandswerts ausgerüstet sein können.

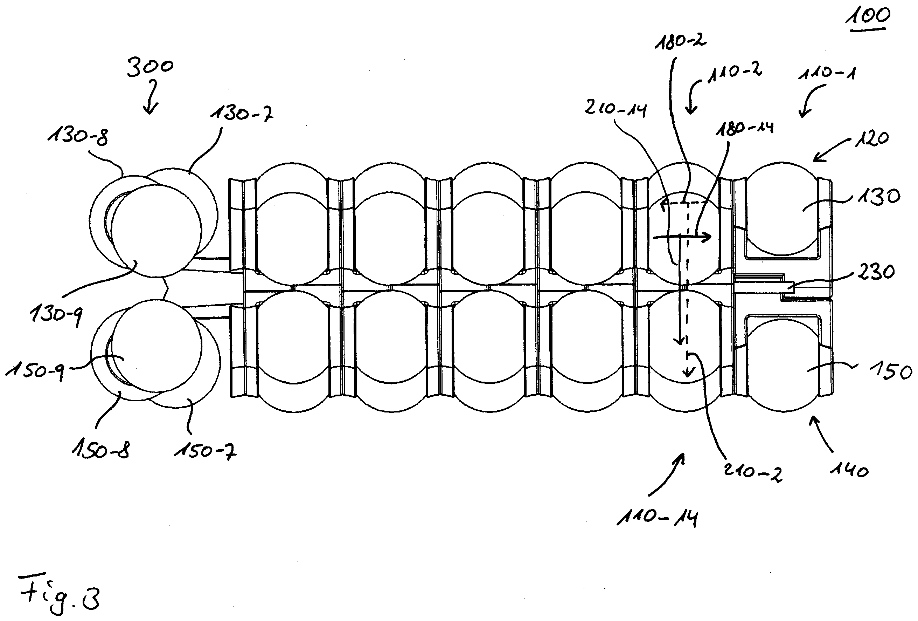

Fig. 3 zeigt eine seitliche Darstellung des Wälzkörperkäfigs 100, wie er bereits in den Figuren 1 und 2 gezeigt ist. So zeigt Fig. 3 mehrere hintereinanderliegende Wälzkörperhalterungen 110 mit entsprechenden ersten und zweiten Wälzkörpern 130, 150. Die nachfolgende Beschreibung im Hinblick auf die erste und zweite Richtung 180, 210 wird aufgrund der Darstellung in Fig. 3 nicht anhand der beiden Wälzkörperaufnahmen 120, 140 sondern vielmehr anhand der Wälzkörper 130, 150 illustriert, da die entsprechenden Wälzkörperaufnahmen 120, 140 zum Teil durch die davorliegenden Wälzkörper und Wälzkörperhalterungen verdeckt werden. Die entsprechenden Eigenschaften können jedoch problemlos auch auf die entsprechenden Wälzkörperaufnahmen 120, 140 übertragen werden.

So liegt bei der in Fig. 3 gewählten Darstellung beispielsweise die Wälzkörperhalterung 110-14 vor der Wälzkörperhalterung 110-2. Anders ausgedrückt weisen die beiden Wälzkörperaufnahmen 120, 140 dieser beiden Wälzkörperhalterungen 110 einmal den maximalen Abstandswert (Wälzkörperhalterung 110-2) und einmal den minimalen Abstandswert (Wälzkörperhalterung 110-14) auf, wie auch ein Vergleich mit Fig. 1 zeigt. Dies illustrieren auch die zwei in Fig. 3 eingezeichneten Pfeile, die die jeweiligen zweiten Richtungen 210-2, 210-14 der beiden Wälzkörperhalterungen 110-2, 110-14 zeigen. Hierbei ist die zweite Richtung 210-2 der Wälzkörperhalterung 110-2 im Hintergrund als gestrichelte Linie eingezeichnet.

Unabhängig von dem jeweiligen Abstandswert der betreffenden Wälzkörperaufnahmen 120, 140 verlaufen jedoch die beiden zweiten Richtungen 210-2 und 210-14 parallel, wobei zur Verbesserung der Sichtbarkeit die beiden Pfeile in Fig. 3 leicht versetzt gezeichnet sind.

Darüber hinaus zeigt Fig. 3 ebenfalls jeweils die erste Richtung 180-2 und 180-14 der beiden Wälzkörperhalterungen 110-2, 110-14, die parallel verlaufen, jedoch in unterschiedliche Richtungen zeigen. Unabhängig davon schließen jedoch im Falle beider Wälzkörperhalterungen 110-2, 110-14 jeweils die erste Richtung 180 und die zweite Richtung 210 einen Winkel von etwa 90° miteinander ein. Anders ausgedrückt, da die beiden Wälzkörperhalterungen 110-2, 110-14 ja gerade zwei Glieder zeigen, von denen eines den maximalen und eines den minimalen Abstand der jeweiligen ersten und zweiten Wälzkörperaufnahmen 120, 140 aufweist, zeigt dies, dass zumindest bei dem in den Figuren 1 bis 3 gezeigten Ausführungsbeispiel jeweils der Winkel, den die jeweiligen ersten und zweiten Richtungen 180, 210 miteinander einschließen, im Wesentlichen mit 90° konstant bleibt.

Darüber hinaus zeigt Fig. 3 in einem Umlenkbereich 300 anhand der sich dort befindlichen Wälzkörperhalterungen 110-7, 110-8, 110-9, wie sich der Abstand entlang des Wälzkörperkäfigs 100 ändert. Aufgrund der Darstellung sind anstelle der Wälzkörperhalterungen im Umlenkbereich 300 lediglich die ersten und zweiten Wälzkörper 130, 150 entsprechend mit Bezugszeichen versehen.

Fig. 4 zeigt eine perspektivische Darstellung eines weiteren Wälzkörperkäfigs 100 gemäß einem weiteren Ausführungsbeispiel. Der Wälzkörperkäfig 100 aus Fig. 4 unterscheidet sich von dem in Fig. 1 gezeigten Wälzkörperkäfig im Wesentlichen hinsichtlich der Anordnung der ersten und zweiten Wälzkörperaufnahmen 120, 140 zueinander. Während bei dem in den Figuren 1 bis 3 gezeigten Wälzkörperkäfig 100 die zweite Richtung 210 im Wesentlichen senkrecht auf der erste Richtung 180 stand, sodass die kugelförmigen Wälzkörper 130, 150 im Wesentlichen bei einem Zusammenschwenken der Wälzkörperaufnahmen 120, 140 aufeinanderstoßen, also fluchtend angeordnet sind, sind bei dem in Fig. 4 gezeigten Wälzkörperkäfig 100 die entsprechenden ersten und zweiten Wälzkörperaufnahmen 120, 140 versetzt zueinander angeordnet. Entsprechend verläuft die zweite Richtung 210 nun nicht mehr im Wesentlichen senkrecht zu der ersten Richtung 180. Konstruktiv sind entsprechend die ersten und zweiten Wälzkörperaufnahmen 120, 140 im Bereich des Scharniers 220 und damit im Bereich des Kopplungselements 230 unterschiedlich ausgestaltet. Ein genauerer konstruktiver Vergleich der Wälzkörperaufnahmen 120, 140 der beiden in den Figuren 1 bis 3 und 4 gezeigten Wälzkörperkäfige 100 ist in den Figuren 8a und 8b gezeigt.

Dadurch, dass nunmehr die zweite Richtung 210 und die erste Richtung 180 nicht mehr senkrecht zueinanderstehen, die Achse des Scharniers 220 jedoch weiterhin parallel zu der ersten Richtung 180 ausgerichtet ist, wird durch ein Schwenken der beiden Wälzkörperaufnahmen 120, 140 zueinander im Wesentlichen eine zu der ersten Richtung senkrechte Komponente der zweiten Richtung 210 hinsichtlich ihrer Länge verändert. Dies führt dazu, dass durch ein Schwenken der beiden Wälzkörperaufnahmen 120, 140 zueinander die Ausrichtung der zweiten Richtung 210 sich mit dem Abstand der beiden Wälzkörperaufnahmen an 120, 140 zueinander und damit entlang des Wälzkörperkäfigs 100 ändert. Dies ist anhand der ersten und zweiten Richtungen 180, 210 in Fig. 4 anhand der beiden Wälzkörperhalterungen 110-1 und 110-15 illustriert.

Abgesehen davon, dass der Wälzkörperkäfig 100 ferner eine zusätzliche Wälzkörperaufnahme 310 aufweist, unterscheiden sich jedoch die Wälzkörperkäfige 100 sowie Wälzkörperhalterungen 110 und die Wälzkörperaufnahmen 120, 140 hinsichtlich anderer Aspekte, also insbesondere hinsichtlich der genauen Ausgestaltung der ersten bis vierten Schenkel und der ersten bis vierten Abschnitte nicht.

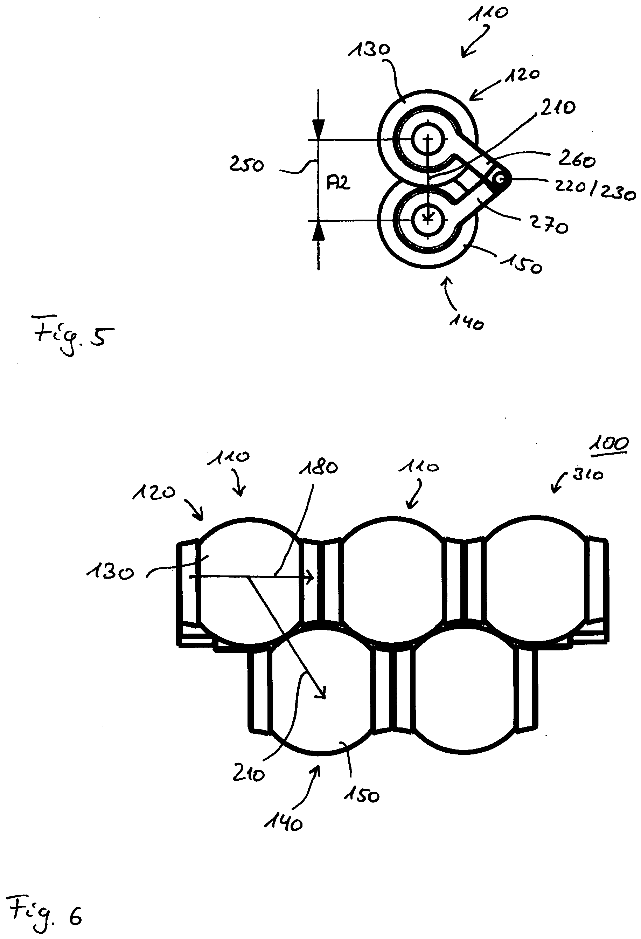

Fig. 5 zeigt eine Darstellung senkrecht zu der ersten Richtung 180 (nicht gezeigt in Fig. 5) bzw. senkrecht zu dem Scharnier 220 bzw. dem Kopplungselement 230, welches wiederum in entsprechenden Bohrungen in der ersten und zweiten Wälzkörperaufnahme 120, 140 geführt ist. Fig. 5 zeigt hierbei die Wälzkörperhalterung 110 in einem zusammen geschwenkten Zustand, bei dem die beiden Wälzkörperaufnahmen 120, 140 und damit die beiden Wälzkörper 130, 150 ihren minimalen Abstandswert 250 (Abstandswert A2) aufweisen. Entsprechend schließt der erste Schenkel 260 und der dritte Schenkel 270 wiederum einen Winkel ein, der kleiner als 180° ist. Aufgrund der in Fig. 5 gewählten Darstellung sind erneut der zweite und vierte Schenkel der beiden Wälzkörperaufnahmen 120, 140 nicht zu sehen bzw. von dem ersten und dritten Schenkel 260, 270 verdeckt.

Darüber hinaus sollte erwähnt werden, dass aufgrund der nun nicht mehr rechtwinkligen Anordnung der ersten und zweiten Richtung 180, 210 die zweite Richtung 210 nicht mehr in der Zeichenebene der Fig. 5 verläuft. Vielmehr ist in Fig. 5 lediglich die in dieser Ebene liegende Komponente der zweiten Richtung 210 wiedergegeben.

Aufgrund der versetzten Anordnungen der Wälzkörperaufhahmen 120, 140 ist es nunmehr möglich, die ersten und zweiten Wälzkörper 130, 150 kompakter anzuordnen, als dies der Wälzkörperkäfig 100 bzw. entsprechende Wälzkörperhalterungen 110 bei dem in den Figuren 1 bis 3 gezeigten Ausführungsbeispiel ermöglicht haben. Um dies näher zu illustrieren, ist in Fig. 6 eine Darstellung längs des Wälzkörperkäfigs 100 dargestellt, welche zwei vollständige Wälzkörperhalterungen 110 sowie eine zusätzliche Wälzkörperaufnahme 310 zeigt. Die ersten und zweiten Wälzkörper 130, 150 und damit die entsprechenden ersten und zweiten Wälzkörperaufnahmen 120, 140 sind hierbei derart versetzt zueinander angeordnet, dass in einem zusammengeschwenkten Zustand, wenn also die erste und zweite Wälzkörperaufnahme 140, 120 ihren minimalen Abstandswert entlang der zweiten Richtung 210 aufweisen, eine Komponente senkrecht zu der ersten Richtung 180 der zweite Richtung 210 kleiner als der doppelte Radius der kugelförmigen Wälzkörper 130, 150 ist.

Die in Fig. 6 gezeigte Anordnung kommt einer besonders platzsparenden bzw. kompakten Anordnung für kugelförmige Wälzkörper 130, 150 hinsichtlich des Abstands in der Ebene senkrecht zu der ersten Richtung 180 sehr nahe. Im Falle dieser Anordnung weisen so die erste und zweite Richtung 180, 210 im zusammengeschwenkten Zustand jeweils einen Winkel von 60° zueinander auf. In einem solchen Fall sind die Wälzkörperaufnahmen 120, 140 also derart ausgebildet, dass die ersten Wälzkörper 130 zweier benachbarter Wälzkörperhalterungen 110 sich gerade berühren. Ebenso berühren beide die zweiten Wälzkörper 150, die zwischen den beiden ersten Wälzkörpern 130 der beiden benachbarten Wälzkörperhalterungen 110 angeordnet sind. In diesem Fall weisen die kugelförmigen Wälzkörper 130 entlang der ersten Richtung und entlang der zweiten Richtung im zusammen geschwenkten Zustand jeweils die minimalen Abstände auf. Die Mittelpunkte der drei betreffenden Wälzkörper bilden also ein gleichseitiges Dreieck.

Bei abweichenden Ausführungsbeispielen der vorliegenden Erfindung kann es jedoch durchaus von Vorteil sein, eine abweichende Geometrie zu realisieren. So kann es beispielsweise aufgrund anderer konstruktive Bedingungen von Vorzug sein, die Wälzkörperaufnahmen 120, 140 derart auszugestalten, dass sich gerade benachbarte erste bzw. zweite Wälzkörper 130, 150 nicht berühren, um beispielsweise eine Geräuschentwicklung, ein Abnutzungsverhalten oder andere Parameter zu verbessern. In einem solchen Fall kann es daher durchaus sinnvoll sein, einen größeren Abstand entlang der ersten Richtung zwischen den ersten Wälzkörpern 130 bzw. den zweiten Wälzkörpern 150 vorzusehen, was gegebenenfalls zu einem noch geringeren Abstand in einer Ebene senkrecht zur ersten Richtung 180 führen kann. Aber auch ein solcher ist nicht zwingend zu realisieren. So kann es durchaus auch hier vorteilhaft sein, einen kleineren minimalen Abstandswert vorzusehen, als theoretisch erreichbar wäre.

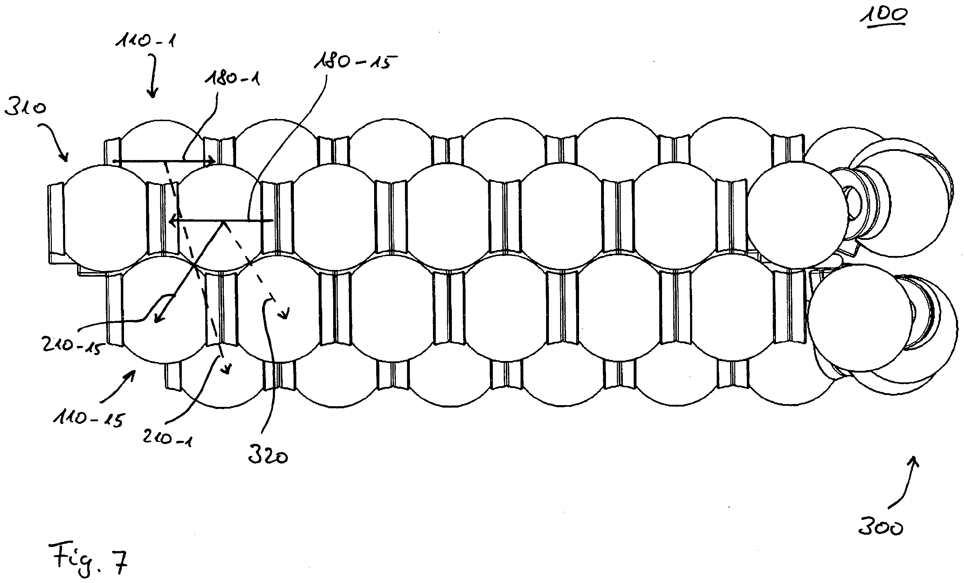

Fig. 7 zeigt eine Seitenansicht des in den Figuren 4 bis 6 gezeigten Wälzkörperkäfigs 100, die der Darstellung aus Fig. 3 ähnelt. So zeigt auch die Fig. 7 wiederum in einem Umlenkbereich 300 eine Veränderung des Abstandswertes der ersten und zweiten Wälzkörperaufnahmen 120, 140 bzw. der ersten und zweiten Wälzkörper 130, 150. Ebenso zeigt Fig. 7 wiederum Wälzkörperhalterungen 110, die hintereinander angeordnet sind. Die zuvor angesprochene und erläuterte Änderung des Winkels zwischen der ersten und zweiten Richtung 180, 210 in Abhängigkeit des Abstands der ersten und zweiten Wälzkörperaufnahme 120, 140 wird erneut an zwei voreinander angeordneten Wälzkörperhalterungen 110-1 und 110-15 dargestellt. Die zusätzliche Wälzkörperaufnahme 310 wird hierbei nicht weiter berücksichtigt.

Fig. 7 zeigt so wiederum für die beiden Wälzkörperhalterungen 110-1 und 110-15 jeweils die ersten Richtungen 180-1 und 180-15, die zueinander parallel, jedoch in entgegengesetzte Richtung verlaufen. Die zweiten Richtungen 210-1, 210-15, die jeweils die ersten und zweiten Wälzkörperaufnahmen 120, 140 der beiden betreffenden Wälzkörperhalterungen 110 miteinander verbinden, weisen jedoch nicht nur eine unterschiedliche Länge, sondern ebenso eine unterschiedliche Richtung auf. Um die unterschiedlichen Winkel näher zu illustrieren, ist die zweite Richtung 210-15 der Wälzkörperhalterung 110-15 als gespiegelte zweite Richtung 320 ebenfalls in Fig. 7 eingezeichnet. Die Darstellung in Fig. 7 zeigt sehr deutlich, dass die gespiegelte zweite Richtung 320 der Wälzkörperhalterung 110-15 und die zweite Richtung 210-1 der Wälzkörperhalterung 110-1 bei rückwärtiger Verlängerung einen Winkel miteinander einschließen, also insbesondere nicht parallel zueinander verlaufen. Anders ausgedrückt bedeutet dies, dass sich die zweite Richtung 210 bei dem in den Figuren 4 bis 7 gezeigten Ausführungsbeispiel eines Wälzkörperkäfigs 100 bzw. der entsprechenden Wälzkörperhalterungen 110 ändert. Dies ist, wie bereits zuvor erwähnt, eine Folge der versetzten Anordnung der Wälzkörperhalterungen 120, 140 einerseits und der im Wesentlichen parallel zu den ersten Richtungen 180 verlaufenden Achse des Scharniers 220.

Das in den Figuren 4 bis 7 gezeigte Ausführungsbeispiel eines Wälzkörperkäfigs 100 bzw. entsprechenden Wälzkörperhalterungen 110 ermöglichen so, im Falle eines Einsatzes bei einem Profilschienenwagen den Bohrungsdurchmesser für den gemeinsamen Rücklaufkanal sogar kleiner als den zweifachen Kugeldurchmesser vorzusehen. Wie bereits zuvor erläutert wurde, können alternativ im Falle der Verwendung von einzelnen Wälzkörperhalterungen 110, die nicht zu einem gemeinsamen Wälzkörperkäfig 100 zusammengefügt wurden (Einzelkäfige) im Rücklauf entsprechend ineinander, versetzt zurücklaufen, also beispielsweise die Kugeln 130, 150 versetzt zurücklaufen.

Fig. 8a zeigt einen Querschnitt einer Wälzkörperaufnahme für ein Linearwälzlager gemäß einem Ausführungsbeispiel, wie es beispielsweise im Rahmen des in den Figuren 1 bis 3 gezeigten Ausführungsbeispiels eines Wälzkörperkäfigs 100 gezeigt ist. Die Wälzkörperaufnahme 330 kann beispielsweise als erste und/oder zweite Wälzkörperaufnahme 120, 140 der Wälzkörperhalterung 110 bzw. Wälzkörperkäfigs 100 aus den Figuren 1 bis 3 eingesetzt werden.

Wie jedoch bereits zuvor erläutert wurde, können durchaus auch andere Wälzkörperaufnahmen als erste und/oder zweite Wälzkörperaufnahmen zum Einsatz kommen, weshalb im Zusammenhang mit den Figuren 8a und 8b abweichend von der bisherigen Darstellung neue Bezugszeichen für diese Wälzkörperaufnahmen vergeben werden. Unabhängig hiervon ist es möglich, die in den Figuren 8a und 8b gezeigten Ausführungsbeispiele bei den in den Figuren 1 bis 3 bzw. 4 bis 7 gezeigten Ausführungsbeispielen als erste und/oder zweite Wälzkörperaufnahmen 120, 140 zu verwenden.

Fig. 8 zeigt eine zweite Wälzkörperaufnahme 330, die wiederum einen ersten Abschnitt 160 und einen zweiten Abschnitt 170 aufweist, die ausgebildet sind, um zusammen einen in Fig. 8a nicht gezeigten Wälzkörper alleine aufzunehmen und drehbar zwischen ihnen zu halten. Darüber hinaus weist die Wälzkörperaufnahme 330 einen Basisabschnitt 340 auf, der den ersten Abschnitt 160 mit dem zweiten Abschnitt 170 mechanisch in der ersten Richtung 180 verbindet. Der Basisabschnitt 340 weist hierbei an einer dem ersten und dem zweiten Abschnitt abgewandten Seite 350 eine Basislänge sowie einen Verbindungsabschnitt 360 auf, der in Fig. 8a von dem Basisabschnitt 340 durch eine gestrichelte Linie getrennt dargestellt ist. Der Verbindungsabschnitt 340 weist hierbei selbst eine Länge auf, die der Hälfte der Basislänge im Wesentlichen entspricht. Der Verbindungsabschnitt 360 weist ferner eine Bohrung 370 entlang der ersten Richtung auf, die ausgebildet ist, um ein Kopplungselement aufzunehmen, welches in Fig. 8a jedoch nicht dargestellt ist.

Der erste und der zweite Abschnitt 160, 170 sind hierbei mit dem Basisabschnitt 340 über einen ersten Schenkel 260 und einen zweiten Schenkel 280 verbunden. Hierdurch bildet der Basisabschnitt 340 zusammen mit den beiden Schenkeln 260, 280 und den beiden Abschnitten 160, 170 eine U-förmige Struktur, die zur Aufnahme eines entsprechenden Wälzkörpers ausgebildet ist.

Zu diesem Zweck können der erste und der zweite Abschnitt 160, 170 beispielsweise kreisringförmig ausgebildet sein, wie dies auch in Fig. 8a dargestellt ist. So weisen der erste Abschnitt eine zentrale Bohrung 380 und der zweite Abschnitt 170 eine zentrale Bohrung 390 auf Der Abstand des ersten und des zweiten Abschnitts 160, 170 voneinander ist hierbei typischerweise geringer als ein Durchmesser des kugelförmigen Wälzkörpers.

Im Falle eines zylinderförmigen, nadelförmigen oder tonnenförmigen Wälzkörpers können der erste und/oder der zweite Abschnitt 160, 170 eine zentrale rechteckige Ausnehmung aufweisen, wobei seine Höhe der Höhe des betreffenden Wälzkörpers entsprechen kann. Ein Abstand des ersten und des zweiten Abschnitts 160, 170 ist typischerweise hierbei wiederum geringer als ein Durchmesser des zylinderförmigen, nadelförmigen oder tonnenförmigen Wälzkörpers. Im Fall eines tonnenförmigen Wälzkörpers kann es sich hierbei um einen minimalen Durchmesser des Wälzkörpers handeln.

Die Bohrung 370 ist hierbei derart ausgebildet, dass sie ein Kopplungselement, also wiederum beispielsweise einen Verbindungsdraht, ein Verbindungsband oder eine Verbindungsschnur aufnehmen kann, sodass die Bohrung 370 einerseits als Bestandteil des Scharniers und andererseits als zur Verbindung bzw. Kopplung mehrerer, die Wälzkörperaufnahme 330 umfassender Wälzkörperhalterungen 110 zu einem Wälzkörperkäfig 100 dienen kann. Darüber hinaus besteht selbstverständlich die Möglichkeit, die Bohrung 370 auch so auszugestalten, dass diese beispielsweise eine Verbindungsschnur oder einen Kopplungsstift aufnehmen kann, um die Wälzkörperaufnahme 330 mit einer weiteren Wälzkörperaufnahme 330 oder einer anderen Wälzkörperaufnahme zu verbinden bzw. zu koppeln, um eine Wälzkörperhalterung 110 gemäß einem Ausführungsbeispiel zu erhalten.

Bevor im Zusammenhang mit Fig. 8b eine weitere Wälzkörperaufnahme 330 gemäß einem Ausführungsbeispiel beschrieben wird, bietet es sich an, daraufhinzuweisen, dass der Verbindungsabschnitt 360 bei der in Figur 8a gezeigten Ausführungsform eine gemeinsame Kante 400 mit dem Basisabschnitt 340 und dem zweiten Schenkel 280 bildet. Hierdurch ergibt sich ein "fehlender Abschnitt" 410, der hinsichtlich seiner Länge der Länge des Verbindungsabschnitts 360 im Wesentlichen entspricht. Hierdurch ist es möglich, eine zweite Wälzkörperaufnahme 330 um eine auf der Zeichenebene der Figur 8a senkrecht stehenden Achse um 180° zu drehen und zu einer Wälzkörperhalterung 110 zusammenzufügen. In diesem Fall greift der Verbindungsabschnitt 360 einer zweiten Wälzkörperaufnahmen 130 in den fehlenden Abschnitt 410 der gedrehten Wälzkörperaufnahme ein und ergänzt diesen hinsichtlich der Länge der Seite 350.

Fig. 8b zeigt ein weiteres Ausführungsbeispiel einer Wälzkörperaufnahme 330, die sich von der in Fig. 8a gezeigten Wälzkörperaufnahme 330 lediglich hinsichtlich der Position des Verbindungsabschnitts 360 an der Seite 350 unterscheidet. Der Verbindungsabschnitt 360 bildet hier nicht mehr eine gemeinsame Außenkante, wie dies bei der Wälzkörperaufnahme 330 aus Fig. 8a der Fall war. Der Verbindungsabschnitt 360 ist nunmehr zentral zu einer Mittellinie 420 der Basislänge angeordnet, sodass zu beiden Seiten des Verbindungsabschnitts 360 jeweils ein Abschnitt 430 der Seite 350 vorhanden ist, der eine Länge aufweist, die einem Viertel der Basislänge des Basisabschnitts 340 entspricht.

Hierdurch ist es möglich, durch ein Drehen einer weiteren Wälzkörperaufnahme 330 um eine auf der Zeichenebene der Figur 8b senkrecht stehenden Achse versetzt an der Wälzkörperaufnahme 330 anzubringen, sodass sich - wie bei dem in den Figuren 4 bis 7 gezeigten Ausführungsbeispiel - eine Wälzkörperhalterung 110 bzw. ein Wälzkörperkäfig 100 mit einer nicht mehr senkrecht auf der ersten Richtung 180 stehenden zweiten Richtung 210 ergibt. Die Ausrichtung des Verbindungsabschnitts 360, wie er bei dem in Fig. 8b gezeigten Ausführungsbeispiel zum Einsatz kommt, führt zu der Anordnung der ersten und zweiten Wälzkörperaufnahme 120, 140 wie diese in den Figuren 4 bis 7 gezeigt ist. Darüber hinaus ist es natürlich möglich, den Verbindungsabschnitt 360 auch an einer abweichenden Position anzusetzen, also an einer anderen Position als in den Figuren 8a und 8b gezeigt ist. Hierdurch ist es möglich, einen Winkel, den die zweite Richtung 210 mit der ersten Richtung einschließt, im Rahmen der durch die Geometrie und die Abstände der Wälzkörper sich ergebenden Möglichkeiten frei zu wählen.

Fig. 9 zeigt einen Querschnitt eines Profilschienenwagens 500 gemäß einem Ausführungsbeispiel. Der Profilschienenwagen 500 weist einen ersten Lastbereich 510-1, einen zweiten Lastbereich 510-2 sowie zwei Rücklaufbereiche 520-1, 520-2 auf, die durch jeweils einen in Fig. 9 nicht gezeigten, in beiden Richtungen einer Senkrechten auf der Zeichenebene der Fig. 9 angeordneten Umlenkbereich miteinander verbunden sind. Bei anderen Ausführungsbeispielen kann gegebenenfalls auch ein einzelner Umlenkbereich ausreichen.

Bei dem in Fig. 9 gezeigten Profilschienenwagen 500 handelt es sich um einen vierreihigen Profilschienenwagen, der in dem Lastbereich in 510-1, 510-2 jeweils zwei Laufbahnen aufweist. Somit weist der Profilschienenwagen 500, wie er in Fig. 9 gezeigt ist, insgesamt vier Laufbahnen 530-1, 530-2, 530-3 und 530-4 auf. Die vier Laufbahnen 530 sind hierbei symmetrisch zu einer Mittellinie 540 angeordnet. Genauer gesagt sind - bezüglich der Mittellinie 540 - die Laufbahn 530-1 und 530-3 sowie die Laufbahnen 530-2 und 530-4 symmetrisch angeordnet. Bei dem in Fig. 9 gezeigten Ausführungsbeispiel eines Profilschienenwagens 500 sind die vier Laufbahnen 530 ferner bezüglich einer Symmetrielinie 550 symmetrisch angeordnet, die mit der Mittellinie 540 einen rechten Winkel einschließt. So sind bei dem in Fig. 9 gezeigten Ausführungsbeispiel die Laufbahnen 530-1 und 530-2 einerseits und die Laufbahnen 530-3 und 530-4 bezüglich der Symmetrielinie 540 symmetrisch angeordnet.

Der Profilschienenwagen 500 umgreift U-förmig eine Profilschiene 560, die ihrerseits ebenfalls vier Laufbahnen 570 aufweist. Entsprechend der Symmetrie der Laufbahnen 530 sind auch die Laufbahnen 570-1, 570-2, 570-3 und 570-4 jeweils entsprechend symmetrisch zu der Mittellinie 540 und der Symmetrielinie 550 angeordnet.

Jeweils zwischen den Laufbahnen 530, 570 des Profilschienenwagens 500 einerseits und der Profilschiene 560 andererseits ist eine Reihe von Wälzkörpern 580 angeordnet, wobei in der in Fig. 9 gezeigten Darstellung lediglich auf der linken Seite eine erste Reihe 580-1 und eine zweite Reihe 580-2 von Wälzkörpern zu sehen sind. Diese Reihen von Wälzkörpern 580 werden jeweils durch eine Vielzahl von ersten und zweiten Wälzkörpern 130, 150 gebildet, die durch eine entsprechende Anzahl von Wälzkörperhalterungen 110 bzw. einen Wälzkörperkäfig 100 gemäß einem Ausführungsbeispiel gehalten und/oder geführt werden.

Hierbei zeigt Fig. 9 den Einsatz eines Wälzkörperkäfigs 100 bzw. einer entsprechenden Anzahl miteinander verbundener bzw. gekoppelter Wälzkörperhalterungen 110 gemäß Ausführungsbeispielen, wie sie in den Figuren 1 bis 3 näher beschrieben und erläutert wurde. So sind bei dem in Fig. 9 gezeigten Profilschienenwagen 500 die jeweils ersten und zweiten Wälzkörperaufnahmen 120, 140 durch ein Kopplungselement 230 in Form eines Verbindungsdrahts gekoppelt, wobei das Kopplungselement 230 gleichzeitig das Scharnier des Wälzkörperkäfigs 100 bzw. Wälzkörperhalterungen 110 zusammen mit den entsprechenden Bohrungen in den Wälzkörperaufnahmen 120, 140 bildet.

Der Rücklaufbereich 520 ist bei dem in Fig. 9 gezeigten Profilschienenwagen 500 gemäß einem Ausführungsbeispiel als ein gemeinsamer Rücklaufkanal 590 jeweils für zwei Reihen von Wälzkörpern 580 gebildet. Der gemeinsame Rücklaufkanal 590 ist als eine Bohrung in einem Körper 600 des Profilschienenwagens 500 realisiert, in denen jeweils die Wälzkörper 130, 150 von zwei Reihen von Wälzkörpern 580-1, 580-2 zurückgeführt werden, die in dem gleichen Wälzkörperkäfig 100 bzw. den entsprechenden Wälzkörperhalterungen 110 geführt werden.

Der wenigstens eine in Fig. 9 nicht gezeigte Umlenkbereich ist hierbei derart ausgestaltet, dass die auch in diesem fortgeführten Laufbahnen dafür sorgen, dass bei Eintritt in den gemeinsamen Rücklaufkanal 590 die Scharniere der Wälzkörperhalterungen 110 des Wälzkörperkäfigs 100 von dem gestreckten Zustand in einem zusammengeschwenkten Zustand überführt werden, sodass ein Abstand der ersten und zweiten Wälzkörperaufnahmen 120, 140 entlang der zweiten Richtung 210 geringer als der maximale Abstandswert ist, den die Wälzkörper 130, 150 in dem Lastbereich 510 aufweisen.

So ermöglichen es gerade Wälzkörperkäfige 100 und Wälzkörperhalterungen 110 gemäß Ausführungsbeispielen, dass der gemeinsame Rücklaufkanal 590 eine Querschnittsform aufweisen kann, die ein Eintreten der Wälzkörper der ersten Reihe 580-1 und der zweiten Reihe 580-2 einen Abstand der beiden Wälzkörperaufnahmen 120, 140 erfordern, der kleiner als der maximale Abstandswert ist. Anders ausgedrückt ermöglichen es Ausführungsbeispiele der vorliegenden Erfindung, einen gemeinsamen Rücklaufkanal mit einem geringeren Querschnitt einzusetzen.

Ausführungsbeispiele der vorliegenden Erfindung ermöglichen es daher, bei der Herstellung des Körpers des Profilschienenwagens 500 die Zahl der notwendigen Bohroperationen gegebenenfalls zu reduzieren. So kann es möglich sein, für jeden der gemeinsamen Rücklaufkanäle 590 nur eine Bohroperation einzusetzen, welche auch noch einfacher zu realisieren sein kann, da größere Bohrungen im sogenannten Tieflochbohrverfahren prozesssicherer und damit leichter herstellbar sind. Bei konventionellen Profilschienenwagen wird heute vielfach noch von beiden Stirnseiten des Profilschienenwagens gebohrt, was häufig zu einem kleinen, wenn auch nicht sehr großen Mittenversatz führen kann, der jedoch aufgrund von Gratbildungen häufig mit Qualitätsproblemen einhergeht.

Käfige 100 bzw. Wälzkörperhalterungen 110 mit variabler Querschnittsgeometrie für Profilschienenwagen 500 gemäß Ausführungsbeispielen können so eine Querschnittsoptimierung, also eine Reduzierung der Abstände bzw. Maße entlang der zweiten Richtung 210 (Z-Richtung) ermöglichen. So kann das Maß im Kugelrücklauf bzw. Wälzkörperrücklauf 520 entlang der zweiten Richtung 210 kleiner als im Lastbereich 510 ausgeführt werden, wie dies ein Vergleich der Maße A1 und A in Fig. 2 illustriert. Wird ein Wälzkörperkäfig 100 bzw. Wälzkörperhalterungen 110 gemäß Ausführungsbeispielen eingesetzt, wie sie in den Figuren 4 bis 7 gezeigt sind, kann aufgrund des Versatzes der Wälzkörper 130, 150 der beiden Reihen von Wälzkörpern zueinander entlang der ersten Richtung 180 gegebenenfalls sogar der Abstand weiter reduziert werden, sodass dieser kleiner als der zweifache Durchmesser der Wälzkörper (Kugeldurchmesser) ist, wie dies das in Fig. 5 gezeigte Maß A2 zeigt. Hierdurch ist es gegebenenfalls möglich, die Steifigkeit des Wagenkörpers im Vergleich zu einer konventionellen Lösung zu verbessern bzw. trotz einer Vereinfachung der Herstellung zu erhalten. Bei einigen Typen von Profilschienenwagen, beispielsweise bei besonders schmalen Varianten, kann so gegebenenfalls eine größere Restwanddicke für Befestigungsbohrungen, die in Fig. 9 nicht gezeigt sind, erzielt werden, was gegebenenfalls sogar zu einer Verbesserung der Steifigkeit des Wagens führen kann.

Bei dem in Fig. 9 gezeigten Ausführungsbeispiel eines Profilschienenwagens 500 weist dieser einen Körper 600 auf, der einteilig bzw. einstückig ausgeführt ist. Die zuvor genannten Effekte können beispielsweise bei einem Profilschienenwagen 500 gemäß einem Ausführungsbeispiel realisiert werden, wenn in den Körper 600 der gemeinsame Rücklaufkanal 590 zusammen mit den entsprechenden Laufbahnen 530 des Lastbereichs 510 realisiert ist. Anders ausgedrückt können die zuvor beschriebenen Effekte beispielsweise dann realisiert werden, wenn in den Körper 600, der einteilig bzw. einstückig ausgebildet ist, der gemeinsame Rücklaufkanal 590 in Form einer Bohrung, einer Fräsung oder einer anderen Ausnehmung und gleichzeitig auch die Laufbahnen 530 realisiert sind.

Im Falle der Verwendung nicht miteinander gekoppelter bzw. nicht miteinander verbundener Wälzkörperhalterungen 110 kann es gegebenenfalls ratsam sein, optionale Rückhalteelemente 610 im Bereich der Laufbahnen 530 des Lastbereichs 510 einzusetzen, um ein Herausfallen der Wälzkörper bzw. der Wälzkörperhalterungen 110 zu unterbinden. Hierdurch kann gegebenenfalls eine Montage des Profilschienenwagens 500 selbst aber auch ein Zusammenführen des Profilschienenwagens 500 mit der Profilschiene 560 vereinfacht werden. In Fig. 9 sind durch gestrichelte Linien mögliche Rückhalteelemente 610 im Bereich des zweiten Lastbereichs 510-2 und seiner beiden Laufbahnen 530-3 und 530-4 eingezeichnet.

Ausführungsbeispiele können so für Profilschienenwagen im Bereich von Linearsystemen in einem weiten Bereich eingesetzt werden. Überall dort, wo eine translatorische Bewegung möglichst reibungsarm geführt werden soll, können Ausführungsbeispiele der vorliegenden Erfindung zum Einsatz kommen. Auch wenn in den Figuren 1 bis 9 lediglich Kugeln als Wälzkörper gezeigt wurden, sind Ausführungsbeispiele bei Weitem nicht auf diese Wälzkörper beschränkt. So ist bereits zuvor der Einsatz von zylinderförmigen, nadelförmigen oder tonnenförmigen Wälzkörpern beschrieben worden. Ebenso sind Ausführungsbeispiele bei Weitem nicht auf symmetrische Anordnungen mit vier Reihen von Wälzkörpern beschränkt, wie sie in Fig. 9 dargestellt sind. Auch asymmetrische Profilschienenwagen, bei denen beispielsweise auf den beiden Seiten einer Mittellinie 540 unterschiedliche Abstände der Laufbahnen 530 in dem Lastbereich 510 verwendet werden müssen, sind entsprechend mithilfe von Ausführungsbeispielen umsetzbar.

Auch ist zu beachten, dass hinsichtlich der Zahl der Wälzkörper bzw. der entsprechenden Wälzkörperaufnahmen die im Rahmen der vorliegenden Beschreibung gezeigten Ausführungsbeispiele lediglich beispielhaft und nicht einschränkend zu verstehen sind. So können Ausführungsbeispiele auch eine größere oder eine kleinere Anzahl entsprechender Wälzkörper bzw. Wälzkörperaufnahmen aufweisen. Ebenso ist zu beachten, dass im Rahmen eines einzigen Wälzkörperkäfigs 100 bzw. der einzelnen Wälzkörperhalterungen 110 auch unterschiedliche Wälzkörper als erste und zweite Wälzkörper 130, 150 zum Einsatz kommen können. So können beispielsweise im Falle kugelförmiger Wälzkörper unterschiedliche Kugelradien verwendet werden oder auch unterschiedliche Wälzkörpergeometrie zum Einsatz kommen. So können also beispielsweise kugelförmige Wälzkörper als erste Wälzkörper 130 mit tonnenförmigen oder zylinderförmigen Wälzkörpern als zweite Wälzkörper 150 im Rahmen eines einzigen Wälzkörperkäfigs 100 bzw. entsprechender Wälzkörperhalterungen 110 kombiniert werden. Ebenso können Wälzkörper mit unterschiedlichen Durchmessern als erste und zweite Wälzkörper 130, 150 im Rahmen von Wälzkörperkäfigen 100 bzw. Wälzkörperhalterungen 110 gemäß Ausführungsbeispielen umgesetzt werden.

## Patentansprüche

1. Wälzkörperaufnahme (330) für ein Linearwälzlager (500) mit einer geschlossenen Wälzkörperumlaufführung, mit folgenden Merkmalen:
einem ersten Abschnitt (160) und einem zweiten Abschnitt (170), die ausgebildet sind, um zusammen einen Wälzkörper alleine aufzunehmen und drehbar zwischen dem ersten und dem zweiten Abschnitt zu halten;
einem Basisabschnitt (340), der den ersten Abschnitt (160) und den zweiten Abschnitt (170) mechanisch in einer ersten Richtung (180) verbindet, wobei der Basisabschnitt (340) an einer dem ersten und dem zweiten Abschnitt (160, 170) abgewandten Seite (350) eine Basislänge aufweist; und
einem Verbindungsabschnitt (360), der mit dem Basisabschnitt (340) an der dem ersten und zweiten Abschnitt abgewandten Seite (350) verbunden ist,
wobei der Verbindungsabschnitt (360) eine Länge aufweist, die der Hälfte der Basislänge entspricht; und
wobei der Verbindungsabschnitt (360) eine Bohrung (370) entlang der ersten Richtung (180) aufweist, um ein Kopplungselement (230) aufnehmbar zu machen.

2. Wälzkörperaufnahme (330) nach Anspruch 1, bei der die Wälzkörperaufnahme (330) eine Wälzkörperaufnahme für einen kugelförmigen Wälzkörper ist, bei der der erste (160) und der zweite Abschnitt (170) kreisringförmig ausgebildet sind und einen Abstand voneinander aufweisen, der geringer als ein Durchmesser des kugelförmigen Wälzkörpers ist; oder
bei der die Wälzkörperaufnahme (330) eine Wälzkörperaufnahme für einen zylinderförmigen, nadelförmigen oder tonnenförmigen Wälzkörper ist, bei der der erste (160) und der zweite Abschnitt (170) eine zentrale, rechteckige Ausnehmung aufweisen und einen Abstand voneinander aufweisen, der geringer als ein Durchmesser des zylinderförmigen, nadelförmigen oder tonnenförmigen Wälzkörpers ist.

3. Wälzkörperkäfig (100) oder Wälzkörperhalterung (110), wobei der Wälzkörperkäfig (100) eine Vielzahl erster Wälzkörperaufnahmen (120) nach einem der Ansprüche 1 oder 2, die entlang einer ersten Richtung (180) angeordnet sind, um eine erste Reihe (580) von ersten Wälzkörpern (130) aufzunehmen, und eine Vielzahl zweiter Wälzkörperaufnahmen (140) nach einem der Ansprüche 1 oder 2 umfasst, die parallel zu der ersten Richtung (180) angeordnet sind und entlang einer zweiten Richtung (210) von der Vielzahl erster Wälzkörperaufnahmen (120) beabstandet sind, wobei die zweite Richtung (210) von einer ersten Wälzkörperaufnahme (120) der Vielzahl erster Wälzkörperaufnahmen zu einer der ersten Wälzkörperaufnahme nächst gelegenen zweiten Wälzkörperaufnahme (140) der Vielzahl zweiter Wälzkörperaufnahmen verläuft, und wobei der Wälzkörperkäfig (100) ausgebildet ist, einen Abstand der ersten Wälzkörperaufnahme (120) zu der zweiten Wälzkörperaufnahme (140) entlang der zweiten Richtung (210) zwischen einem maximalen Abstandswert und einem minimalen Abstandswert veränderbar zu machen;
und
wobei die
Wälzkörperhalterung (110) eine erste Wälzkörperaufnahme (120) nach einem der Ansprüche 1 oder 2 und eine zweite Wälzkörperaufnahme (140) nach einem der Ansprüche 1 oder 2 umfasst, wobei die erste Wälzkörperaufnahme (120) einen ersten Abschnitt (160) und einen zweiten Abschnitt (170) aufweist, die ausgebildet sind, um zusammen einen Wälzkörper (130) alleine aufzunehmen und drehbar zwischen dem ersten und dem zweiten Abschnitt zu halten, wobei der erste Abschnitt (160) und der zweite Abschnitt (170) der ersten Wälzkörperaufnahme (120) entlang einer ersten Richtung (180) angeordnet sind, wobei die erste und die zweite Wälzkörperaufnahme entlang einer von der ersten Richtung (180) verschiedenen zweiten Richtung (210) angeordnet sind, und wobei die Wälzkörperhalterung (110) ausgebildet ist, um einen Abstand der ersten Wälzkörperaufnahme zu der zweiten Wälzkörperaufnahme entlang der zweiten Richtung (210) zwischen einem maximalen Abstandswert und einem minimalen Abstandswert veränderbar zu machen.

4. Wälzkörperhalterung (110) nach Anspruch 3, bei der zwischen der ersten (120) und der zweiten Wälzkörperaufnahme (140) ein Scharnier (220) angeordnet ist, welches die beiden Wälzkörperaufnahmen zueinander schwenkbar macht, wobei das Scharnier (220) ausgebildet ist, um die beiden Wälzkörper (130) um eine Achse schwenkbar zu machen, die beispielsweise im Wesentlichen parallel zu der ersten Richtung (180) verläuft.

5. Wälzkörperhalterung (120, 140) nach einem der Ansprüche 3 oder 4, die ferner eine Kopplungseinrichtung (230) aufweist, die ausgebildet ist, um eine Mehrzahl von Wälzkörperhalterungen (110) miteinander koppelbar zu machen, um einen Wälzkörperkäfig (100) zu bilden, wobei die Kopplungseinrichtung beispielsweise eine Schnappverbindung, einen Haken, Öse oder eine Bohrung zum Koppeln mit einem Kopplungselement, beispielsweise einem Verbindungsdraht, einem Verbindungsband oder einer Verbindungsschnur umfasst.

6. Wälzkörperkäfig (100) nach Anspruch 3, bei dem zwischen der ersten (120) und der zweiten (140) Wälzkörperaufnahme ein Scharnier (220) angeordnet ist, welches die beiden Wälzkörperaufnahmen zueinander schwenkbar macht, wobei beispielsweise das Scharnier (220) die beiden Wälzkörperaufnahmen um eine Achse schwenkbar macht, die im Wesentlichen parallel zu der ersten Richtung (180) verläuft.

7. Wälzkörperkäfig (100) nach Anspruch 6, bei dem das Scharnier (220) eine Bohrung in der ersten Wälzkörperaufnahme (120), eine Bohrung in der zweiten Wälzkörperaufnahme (140) und ein Kopplungselement (230) umfasst, wobei das Kopplungselement (230) beispielsweise ein Verbindungsdraht, ein Verbindungsband oder eine Verbindungsschnur umfasst.

8. Profilschienenwagen (500),
mit folgenden Merkmalen:
einem Wälzkörperkäfig (100) oder einer Mehrzahl von Wälzkörperhalterungen (110);
einer Vielzahl von Wälzkörpern (130, 150), die in den Wälzkörperaufnahmen (120, 140) des Wälzkörperkäfigs (100) oder der Mehrzahl von Wälzkörperhalterungen (110) aufgenommen sind, wobei die Wälzkörper in den ersten Wälzkörperaufnahmen (120) eine erste Reihe (380) von Wälzkörpern und die Wälzkörper in den zweiten Wälzkörperaufnahmen (140) eine zweite Reihe (380) von Wälzkörpern bilden;
einem Lastbereich (510), einem Rücklaufbereich (520); und einem Umlenkbereich,
der zwischen dem Lastbereich (510) und dem Rücklaufbereich (520) angeordnet ist,
wobei der Wälzkörperkäfig (100) oder die Mehrzahl von Wälzkörperhalterungen (110) in dem Rücklaufbereich (520) in einem gemeinsamen Rücklaufkanal (590) für die erste und die zweite Reihe (380) von Wälzkörpern geführt sind; und
wobei der gemeinsame Rücklaufkanal (390) eine Querschnittsform aufweist, sodass ein Eintreten der Wälzkörper der ersten Reihe (380) und der zweiten Reihe (380) einen Abstand der ersten (120) und zweiten Wälzkörperaufnahmen (140) erfordert, der kleiner als der maximale Abstandswert ist;
wobei die Wälzkörperhalterung (110) eine erste Wälzkörperaufnahme (120) und eine zweite Wälzkörperaufnahme (140) umfasst, wobei die erste Wälzkörperaufnahme (120) einen ersten Abschnitt (160) und einen zweiten Abschnitt (170) aufweist, die ausgebildet sind, um zusammen einen Wälzkörper (130) alleine aufzunehmen und drehbar zwischen dem ersten und dem zweiten Abschnitt zu halten, wobei der erste Abschnitt (160) und der zweite Abschnitt (170) der ersten Wälzkörperaufnahme (120) entlang einer ersten Richtung (180) angeordnet sind, wobei die erste und die zweite Wälzkörperaufnahme entlang einer von der ersten Richtung (180) verschiedenen zweiten Richtung (210) angeordnet sind, und wobei die Wälzkörperhalterung (110) ausgebildet ist, um einen Abstand der ersten Wälzkörperaufnahme zu der zweiten Wälzkörperaufnahme entlang der zweiten Richtung (210) zwischen einem maximalen Abstandswert und einem minimalen Abstandswert veränderbar zu machen;
bzw.
wobei der Wälzkörperkäfig (100) eine Vielzahl erster Wälzkörperaufnahmen (120), die entlang einer ersten Richtung (180) angeordnet sind, um eine erste Reihe (580) von ersten Wälzkörpern (130) aufzunehmen, und eine Vielzahl zweiter Wälzkörperaufnahmen (140) umfasst, die parallel zu der ersten Richtung (180) angeordnet sind und entlang einer zweiten Richtung (210) von der Vielzahl erster Wälzkörperaufnahmen (120) beabstandet sind, wobei die zweite Richtung (210) von einer ersten Wälzkörperaufnahme (120) der Vielzahl erster Wälzkörperaufnahmen zu einer der ersten Wälzkörperaufnahme nächst gelegenen zweiten Wälzkörperaufnahme (140) der Vielzahl zweiter Wälzkörperaufnahmen verläuft, und wobei der Wälzkörperkäfig (100) ausgebildet ist, einen Abstand der ersten Wälzkörperaufnahme (120) zu der zweiten Wälzkörperaufnahme (140) entlang der zweiten Richtung (210) zwischen einem maximalen Abstandswert und einem minimalen Abstandswert veränderbar zu machen.

9. Profilschienenwagen (500) nach Anspruch 8, bei dem bei der Wälzkörperhalterung (110) zwischen der ersten (120) und der zweiten Wälzkörperaufnahme (140) ein Scharnier (220) angeordnet ist, welches die beiden Wälzkörperaufnahmen zueinander schwenkbar macht, wobei das Scharnier (220) ausgebildet ist, um die beiden Wälzkörper (130) um eine Achse schwenkbar zu machen, die beispielsweise im Wesentlichen parallel zu der ersten Richtung (180) verläuft.

10. Profilschienenwagen (500) nach einem der Ansprüche 8 oder 9, bei dem die Wälzkörperhalterung (120, 140) ferner eine Kopplungseinrichtung (230) aufweist, die ausgebildet ist, um eine Mehrzahl von Wälzkörperhalterungen (110) miteinander koppelbar zu machen, um einen Wälzkörperkäfig (100) zu bilden, wobei die Kopplungseinrichtung beispielsweise eine Schnappverbindung, einen Haken, Öse oder eine Bohrung zum Koppeln mit einem Kopplungselement, beispielsweise einem Verbindungsdraht, einem Verbindungsband oder einer Verbindungsschnur umfasst.

11. Profilschienenwagen (500) nach Anspruch 8, bei dem bei dem Wälzkörperkäfig (100) zwischen der ersten (120) und der zweiten (140) Wälzkörperaufnahme ein Scharnier (220) angeordnet ist, welches die beiden Wälzkörperaufnahmen zueinander schwenkbar macht, wobei beispielsweise das Scharnier (220) die beiden Wälzkörperaufnahmen um eine Achse schwenkbar macht, die im Wesentlichen parallel zu der ersten Richtung (180) verläuft.

12. Profilschienenwagen (500) nach Anspruch 11, bei dem bei dem Wälzkörperkäfig (100) das Scharnier (220) eine Bohrung in der ersten Wälzkörperaufnahme (120), eine Bohrung in der zweiten Wälzkörperaufnahme (140) und ein Kopplungselement (230) umfasst, wobei das Kopplungselement (230) beispielsweise ein Verbindungsdraht, ein Verbindungsband oder eine Verbindungsschnur umfasst.

## Claims

1. Rolling body seat (330) for a linear anti-friction bearing (500) having a closed rolling body recirculating guide, with the following features:
a first section (160) and a second section (170) which are configured so as to together receive one rolling body on its own and to hold it rotatably between the first and the second section;
a base section (340) which connects the first section (160) and the second section (170) mechanically in a first direction (180), the base section (340) having a base length on a side (350) which faces away from the first and the second section (160, 170); and
a connecting section (360) which is connected to the base section (340) on the side (350) which faces away from the first and second section,
the connecting section (360) having a length which corresponds to half the base length; and
the connecting section (360) having a bore (370) along the first direction (180), in order to make it possible for a coupling element (230) to be received.

2. Rolling body seat (330) according to Claim 1, in which the rolling body seat (330) is a rolling body seat for a spherical rolling body, in which rolling body seat (330) the first (160) and the second section (170) are of circularly annular configuration and are at a spacing from one another which is smaller than a diameter of the spherical rolling body; or
in which the rolling body seat (330) is a rolling body seat for a cylindrical, needle-shaped or barrel-shaped rolling body, in which rolling body seat (330) the first (160) and the second section (170) have a central, rectangular recess and are at a spacing from one another which is smaller than a diameter of the cylindrical, needle-shaped or barrel-shaped rolling body.

3. Rolling body cage (100) or rolling body holding device (110), the rolling body cage (100) comprising a multiplicity of first rolling body seats (120) according to either of Claims 1 and 2 which are arranged along a first direction (180), in order to receive a first row (580) of first rolling bodies (130), and a multiplicity of second rolling body seats (140) according to either of Claims 1 and 2 which are arranged parallel to the first direction (180) and are spaced apart along a second direction (210) from the multiplicity of first rolling body seats (120), the second direction (210) running from a first rolling body seat (120) of the multiplicity of first rolling body seats to a second rolling body seat (140) of the multiplicity of second rolling body seats which lies closest to the first rolling body seat, and the rolling body cage (100) being configured so as to make a spacing of the first rolling body seat (120) from the second rolling body seat (140) variable between a maximum spacing value and a minimum spacing value along the second direction (210);
and
the rolling body holding device (110) comprising a first rolling body seat (120) according to either of Claims 1 and 2 and a second rolling body seat (140) according to either of Claims 1 and 2, the first rolling body seat (120) having a first section (160) and a second section (170) which are configured so as to together receive one rolling body (130) on its own and to hold it rotatably between the first and the second section, the first section (160) and the second section (170) of the first rolling body seat (120) being arranged along a first direction (180), the first and the second rolling body seat being arranged along a second direction (210) which is different from the first direction (180), and the rolling body holding device (110) being configured so as to make a spacing of the first rolling body seat from the second rolling body seat variable between a maximum spacing value and a minimum spacing value along the second direction (210).

4. Rolling body holding device (110) according to Claim 3, in which a hinge (220) is arranged between the first (120) and the second rolling body seat (140), which hinge (220) makes the two rolling body seats pivotable with respect to one another, the hinge (220) being configured so as to make the two rolling bodies (130) pivotable about an axis which runs, for example, substantially parallel to the first direction (180).

5. Rolling body holding device (120, 140) according to either of Claims 3 and 4, which has, furthermore, a coupling device (230) which is configured so as to make it possible for a plurality of rolling body holding devices (110) to be coupled to one another, in order to form a rolling body cage (100), the coupling device comprising, for example, a snap-in connection, a hook, eyelet or a bore for coupling to a coupling element, for example a connecting wire, a connecting strap or a connecting cord.

6. Rolling body cage (100) according to Claim 3, in which a hinge (220) is arranged between the first (120) and the second (140) rolling body seat, which hinge (220) makes the two rolling body seats pivotable with respect to one another, the hinge (220), for example, making the two rolling body seats pivotable about an axis which runs substantially parallel to the first direction (180).

7. Rolling body cage (100) according to Claim 6, in which the hinge (220) comprises a bore in the first rolling body seat (120), a bore in the second rolling body seat (140), and a coupling element (230), the coupling element (230) comprising, for example, a connecting wire, a connecting strap or a connecting cord.

8. Profiled rail carriage (500),
with the following features:
a rolling body cage (100) or a plurality of rolling body holding devices (110);
a multiplicity of rolling bodies (130, 150) which are received in the rolling body seats (120, 140) of the rolling body cage (100) or the plurality of rolling body holding devices (110), the rolling bodies in the first rolling body seats (120) forming a first row (380) of rolling bodies, and the rolling bodies in the second rolling body seats (140) forming a second row (380) of rolling bodies;
a load-bearing region (510), a return region (520); and a deflection region which is arranged between the load-bearing region (510) and the return region (520),
the rolling body cage (100) or the plurality of rolling body holding devices (110) being guided in the return region (520) in a common return channel (590) for the first and the second row (380) of rolling bodies; and
the common return channel (390) having a cross-sectional shape, such that entry of the rolling bodies of the first row (380) and the second row (380) requires a spacing of the first (120) and second rolling body seats (140) which is smaller than the maximum spacing value;
the rolling body holding device (110) comprising a first rolling body seat (120) and a second rolling body seat (140), the first rolling body seat (120) having a first section (160) and a second section (170) which are configured so as to together receive one rolling body (130) on its own and to hold it rotatably between the first and the second section, the first section (160) and the second section (170) of the first rolling body seat (120) being arranged along a first direction (180), the first and the second rolling body seat being arranged along a second direction (210) which is different from the first direction (180), and the rolling body holding device (110) being configured so as to make a spacing of the first rolling body seat from the second rolling body seat variable between a maximum spacing value and a minimum spacing value along the second direction (210);
and/or
the rolling body cage (100) comprising a multiplicity of first rolling body seats (120) which are arranged along a first direction (180), in order to receive a first row (580) of first rolling bodies (130), and a multiplicity of second rolling body seats (140) which are arranged parallel to the first direction (180) and are spaced apart along a second direction (210) from the multiplicity of first rolling body seats (120), the second direction (210) running from a first rolling body seat (120) of the multiplicity of first rolling body seats to a second rolling body seat (140) of the multiplicity of second rolling body seats which lies closest to the first rolling body seat, and the rolling body cage (100) being configured so as to make a spacing of the first rolling body seat (120) from the second rolling body seat (140) variable between a maximum spacing value and a minimum spacing value along the second direction (210).

9. Profiled rail carriage (500) according to Claim 8, in which, in the case of the rolling body holding device (110), a hinge (220) is arranged between the first (120) and the second rolling body seat (140), which hinge (220) makes the two rolling body seats pivotable with respect to one another, the hinge (220) being configured so as to make the two rolling bodies (130) pivotable about an axis which runs, for example, substantially parallel to the first direction (180).

10. Profiled rail carriage (500) according to either of Claims 8 and 9, in which the rolling body holding device (120, 140) has, furthermore, a coupling device (230) which is configured so as to make it possible for a plurality of rolling body holding devices (110) to be coupled to one another, in order to form a rolling body cage (100), the coupling device comprising, for example, a snap-in connection, a hook, eyelet or a bore for coupling to a coupling element, for example a connecting wire, a connecting strap or a connecting cord.

11. Profiled rail carriage (500) according to Claim 8, in which, in the case of the rolling body cage (100), a hinge (220) is arranged between the first (120) and the second (140) rolling body seat, which hinge (220) makes the two rolling body seats pivotable with respect to one another, the hinge (220), for example, making the two rolling body seats pivotable about an axis which runs substantially parallel to the first direction (180).

12. Profiled rail carriage (500) according to Claim 11, in which, in the case of the rolling body cage (100), the hinge (220) comprises a bore in the first rolling body seat (120), a bore in the second rolling body seat (140), and a coupling element (230), the coupling element (230) comprising, for example, a connecting wire, a connecting strap or a connecting cord.

## Revendications

1. Siège de corps de roulement (330) pour un palier de roulement linéaire (500) avec un guidage de circulation fermé des corps de roulement, présentant les caractéristiques suivantes:
une première partie (160) et une deuxième partie (170), qui sont configurées pour contenir ensemble un corps de roulement seul et le maintenir en rotation entre la première partie et la deuxième partie;
une partie de base (340), qui relie mécaniquement dans une première direction (180) la première partie (160) et la deuxième partie (170), dans laquelle la partie de base (340) présente une longueur de base sur un côté (350) détourné de la première et de la deuxième parties (160, 170); et
une partie de liaison (360), qui est reliée à la partie de base (340) sur le côté (350) détourné de la première et de la deuxième parties,
dans lequel la partie de liaison (360) présente une longueur, qui correspond à la moitié de la longueur de base; et
dans lequel la partie de liaison (360) présente un alésage (370) le long de la première direction (180), afin de permettre la réception d'un élément de couplage (230).

2. Siège de corps de roulement (330) selon la revendication 1, dans laquelle le siège de corps de roulement (330) est un siège de corps de roulement pour un corps de roulement sphérique, dans lequel la première (160) et la deuxième (170) parties sont réalisées en forme d'anneau circulaire et présentent l'une par rapport à l'autre une distance, qui est plus petite qu'un diamètre du corps de roulement sphérique; ou
dans lequel le siège de corps de roulement (330) est un siège de corps de roulement pour un corps de roulement en forme de cylindre, en forme d'aiguille ou en forme de tonneau, dans lequel la première (160) et la deuxième (170) parties présentent un évidement central rectangulaire et présentent une distance l'une de l'autre, qui est plus petite qu'un diamètre du corps de roulement en forme de cylindre, en forme d'aiguille ou en forme de tonneau.

3. Cage de corps de roulement (100) ou support de corps de roulement (110), dans laquelle/lequel la cage de corps de roulement (100) comprend une multiplicité de premiers sièges de corps de roulement (120) selon une des revendications 1 ou 2, qui sont disposés le long d'une première direction (180) pour recevoir une première série (580) de premiers corps de roulement (130), et une multiplicité de deuxièmes sièges de corps de roulement (140) selon une des revendications 1 ou 2, qui sont disposés parallèlement à la première direction (180) et qui sont espacés dans une deuxième direction (210) de la multiplicité de premiers sièges de corps de roulement (120), dans laquelle la deuxième direction (210) court d'un premier siège de corps de roulement (120) de la multiplicité de premiers sièges de corps de roulement à un deuxième siège de corps de roulement (140) de la multiplicité de deuxièmes sièges de corps de roulement situé le plus près du premier siège de corps de roulement, et dans laquelle la cage de corps de roulement (100) est configurée de façon à permettre la variation d'une distance du premier siège de corps de roulement (120) au deuxième siège de corps de roulement (140) le long de la deuxième direction (210) entre une valeur de distance maximale et une valeur de distance minimale;
et
dans laquelle le support de corps de roulement (110) comprend un premier siège de corps de roulement (120) selon une des revendications 1 ou 2 et un deuxième siège de corps de roulement (140) selon une des revendications 1 ou 2, dans laquelle le premier siège de corps de roulement (120) présente une première partie (160) et une deuxième partie (170), qui sont configurées pour contenir ensemble un corps de roulement seul (130) et le maintenir en rotation entre la première partie et la deuxième partie, dans laquelle la première partie (160) et la deuxième partie (170) du premier siège de corps de roulement (120) sont disposées le long d'une première direction (180), dans laquelle le premier et le deuxième sièges de corps de roulement sont disposés le long d'une deuxième direction (210) différente de la première direction (180), et dans laquelle le support de corps de roulement (110) est configuré de façon à permettre la variation d'une distance du premier siège de corps de roulement au deuxième siège de corps de roulement le long de la deuxième direction (210) entre une valeur de distance maximale et une valeur de distance minimale.

4. Support de corps de roulement (110) selon la revendication 3, dans lequel une charnière (220) est disposée entre le premier (120) et le deuxième (140) sièges de corps de roulement, qui permet le pivotement des deux sièges de corps de roulement l'un par rapport à l'autre, dans lequel la charnière (220) est configurée de façon à permettre le pivotement des deux corps de roulement (130) autour d'un axe, qui court par exemple d'une façon essentiellement parallèle à la première direction (180).

5. Support de corps de roulement (120, 140) selon une des revendication 3 ou 4, qui présente en outre un dispositif de couplage (230), qui est configuré de façon à permettre le couplage l'un à l'autre d'une pluralité de supports de corps de roulement (110), afin de former une cage de corps de roulement (100), dans lequel le dispositif de couplage comprend par exemple un assemblage à déclic, un crochet, des oeillets ou un alésage pour le couplage avec un élément de couplage, par exemple un fil de liaison, une bande de liaison ou un cordon de liaison.

6. Cage de corps de roulement (100) selon la revendication 3, dans laquelle une charnière (220) est disposée entre le premier (120) et le deuxième (140) sièges de corps de roulement, qui permet le pivotement des deux sièges de corps de roulement l'un par rapport à l'autre, dans laquelle la charnière (220) permet par exemple le pivotement des deux sièges de corps de roulement autour d'un axe, qui court de façon essentiellement parallèle à la première direction (180).

7. Cage de corps de roulement (100) selon la revendication 6, dans laquelle la charnière (220) comprend un alésage dans le premier siège de corps de roulement (120), un alésage dans le deuxième siège de corps de roulement (140) et un élément de couplage (230), dans laquelle l'élément de couplage (230) comprend par exemple un fil de liaison, une bande de liaison ou un cordon de liaison.

8. Véhicule sur rail profilé (500),
présentant les caractéristiques suivantes:
une cage de corps de roulement (100) ou une pluralité de supports de corps de roulement (110);
une multiplicité de corps de roulement (130, 150), qui sont contenus dans les sièges de corps de roulement (120, 140) de la cage de corps de roulement (100) ou de la pluralité de supports de corps de roulement (110), dans lequel les corps de roulement dans les premiers sièges de corps de roulement (120) forment une première série (380) de corps de roulement et les corps de roulement dans les deuxièmes sièges de corps de roulement (140) forment une deuxième série (380) de corps de roulement;
une région de chargement (510), une région de retour (520) et une région de déviation, qui est disposée entre la région de chargement (510) et la région de retour (520),
dans lequel la cage de corps de roulement (100) ou la pluralité de supports de corps de roulement (110) est guidée dans la région de retour (520) dans un canal de retour commun (590) pour la première et la deuxième séries (380) de corps de roulement; et
dans lequel le canal de retour commun (390) présente une forme de section transversale, telle qu'une entrée des corps de roulement de la première série (380) et de la deuxième série (380) nécessite une distance du premier (120) et du deuxième (140) sièges de corps de roulement, qui est plus petite que la valeur de distance maximale;
dans lequel le support de corps de roulement (110) comprend un premier siège de corps de roulement (120) et un deuxième siège de corps de roulement (140), dans lequel le premier siège de corps de roulement (120) présente une première partie (160) et une deuxième partie (170), qui sont configurées pour contenir ensemble un corps de roulement seul (130) et le maintenir en rotation entre la première partie et la deuxième partie, dans lequel la première partie (160) et la deuxième partie (170) du premier siège de corps de roulement (120) sont disposées le long d'une première direction (180), dans lequel le premier et le deuxième sièges de corps de roulement sont disposés le long d'une deuxième direction (210) différente de la première direction (180), et dans lequel le support de corps de roulement (110) est configuré de façon à permettre la variation d'une distance du premier siège de corps de roulement au deuxième siège de corps de roulement le long de la deuxième direction (210) entre une valeur de distance maximale et une valeur de distance minimale;
ou
dans lequel la cage de corps de roulement (100) comprend une multiplicité de premiers sièges de corps de roulement (120), qui sont disposés le long d'une première direction (180) pour recevoir une première série (580) de premiers corps de roulement (130), et une multiplicité de deuxièmes sièges de corps de roulement (140), qui sont disposés parallèlement à la première direction (180) et qui sont espacés dans une deuxième direction (210) de la multiplicité de premiers sièges de corps de roulement (120), dans lequel la deuxième direction (210) court d'un premier siège de corps de roulement (120) de la multiplicité de premiers sièges de corps de roulement à un deuxième siège de corps de roulement (140) de la multiplicité de deuxièmes sièges de corps de roulement situé le plus près du premier siège de corps de roulement, et dans lequel la cage de corps de roulement (100) est configurée de façon à permettre la variation d'une distance du premier siège de corps de roulement (120) au deuxième siège de corps de roulement (140) le long de la deuxième direction (210) entre une valeur de distance maximale et une valeur de distance minimale.

9. Véhicule sur rail profilé (500) selon la revendication 8, dans lequel une charnière (220) est disposée près du support de corps de roulement (110) entre le premier (120) et le deuxième (140) sièges de corps de roulement, qui permet le pivotement des deux sièges de corps de roulement l'un par rapport à l'autre, dans lequel la charnière (220) est configurée de façon à permettre le pivotement des deux corps de roulement (130) autour d'un axe, qui court par exemple d'une façon essentiellement parallèle à la première direction (180).

10. Véhicule sur rail profilé (500) selon une des revendications 8 ou 9, dans lequel le support de corps de roulement (120, 140) présente en outre un dispositif de couplage (230), qui est configuré de façon à permettre le couplage l'un à l'autre d'une pluralité de supports de corps de roulement (110), afin de former une cage de corps de roulement (100), dans lequel le dispositif de couplage comprend par exemple un assemblage à déclic, un crochet, des oeillets ou un alésage pour le couplage avec un élément de couplage, par exemple un fil de liaison, une bande de liaison ou un cordon de liaison.

11. Véhicule sur rail profilé (500) selon la revendication 8, dans lequel une charnière (220) est disposée près de la cage de corps de roulement (100) entre le premier (120) et le deuxième (140) sièges de corps de roulement, qui permet le pivotement des deux sièges de corps de roulement l'un par rapport à l'autre, dans lequel la charnière (220) permet par exemple le pivotement des deux sièges de corps de roulement autour d'un axe, qui court de façon essentiellement parallèle à la première direction (180).

12. Véhicule sur rail profilé (500) selon la revendication 11, dans lequel la charnière (220) comprend près de la cage de corps de roulement (100) un alésage dans le premier siège de corps de roulement (120), un alésage dans le deuxième siège de corps de roulement (140) et un élément de couplage (230), dans laquelle l'élément de couplage (230) comprend par exemple un fil de liaison, une bande de liaison ou un cordon de liaison.
